(19) Europäisches Patentamt
European Patent Office
Office européen des brevets

(11) EP 2 643 423 B1

(12) **EUROPÄISCHE PATENTSCHRIFT**

(45) Veröffentlichungstag und Bekanntmachung des Hinweises auf die Patenterteilung:
**29.05.2019 Patentblatt 2019/22**

(21) Anmeldenummer: **11784721.0**

(22) Anmeldetag: **22.11.2011**

(51) Int Cl.:
***C09K 8/588*** *(2006.01)*

(86) Internationale Anmeldenummer:
**PCT/EP2011/070688**

(87) Internationale Veröffentlichungsnummer:
**WO 2012/069477 (31.05.2012 Gazette 2012/22)**

(54) **VERFAHREN ZUR ERDÖLFÖRDERUNG UNTER VERWENDUNG HYDROPHOB ASSOZIIERENDER COPOLYMERE**

METHOD FOR OIL RECOVERY USING HYDROPHOBICALLY ASSOCIATING POLYMERS

PROCÉDÉ D'EXTRACTION DE PÉTROLE EN UTILISANT DES COPOLYMÈRES ASSOCIATIFS HYDROPHOBES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.11.2010 EP 10192323**

(43) Veröffentlichungstag der Anmeldung:
**02.10.2013 Patentblatt 2013/40**

(73) Patentinhaber: **BASF SE**
**67056 Ludwigshafen am Rhein (DE)**

(72) Erfinder:
- **LANGLOTZ, Björn**
**83308 Trostberg (DE)**
- **REICHENBACH-KLINKE, Roland**
**83278 Traunstein (DE)**
- **SPINDLER, Christian**
**67061 Ludwigshafen (DE)**
- **WENZKE, Benjamin**
**20251 Hamburg (DE)**

(74) Vertreter: **BASF IP Association**
**BASF SE**
**G-FLP-C006**
**67056 Ludwigshafen (DE)**

(56) Entgegenhaltungen:
**EP-A2- 0 226 097 WO-A1-85/03510**
**US-A- 4 814 096**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Erdölförderung bei dem man eine wässrige Formulierung umfassend mindestens ein wasserlösliches, hydrophob assoziierendes Copolymer durch mindestens eine Injektionsbohrung in eine Erdöllagerstätte mit einer Lagerstättentemperatur von 40°C bis 90°C einpresst und der Lagerstätte durch mindestens eine Produktionsbohrung Rohöl entnimmt, wobei das wasserlösliche, hydrophob assoziierende Copolymer mindestens Acrylamid bzw. Derivate davon, ein $-SO_3H$ Gruppen aufweisendes Monomer sowie ein Monomer, welches das hydrophobe Assoziieren des Copolymers bewirken kann, umfasst.

In natürlichen Erdölvorkommen liegt Erdöl in den Hohlräumen poröser Speichergesteine vor, welche zur Erdoberfläche hin von undurchlässigen Deckschichten abgeschlossen sind. Bei den Hohlräumen kann es sich um sehr feine Hohlräume, Kapillaren, Poren oder dergleichen handeln. Feine Porenhälse können beispielsweise einen Durchmesser von nur ca. 1 µm aufweisen. Neben Erdöl, inklusive Anteilen von Erdgas enthält eine Lagerstätte außerdem mehr oder weniger stark salzhaltiges Wasser.

Bei der Erdölförderung unterscheidet man zwischen der primären, sekundären und tertiären Förderung.

Bei der primären Förderung strömt das Erdöl nach dem Anbohren der Lagerstätte aufgrund des Eigendrucks der Lagerstätte von selbst durch das Bohrloch an die Oberfläche. Der Eigendruck kann beispielsweise durch in der Lagerstätte vorhandene Gase wie Methan, Ethan oder Propan hervorgerufen werden. Der Eigendruck der Lagerstätte lässt bei Entnahme von Erdöl aber in der Regel relativ schnell nach, so dass mittels der primären Förderung je nach Lagerstättentyp meist nur ca. 5 bis 10% der in der Lagerstätte vorhandenen Erdölmenge gefördert werden können. Danach reicht der Eigendruck nicht mehr zur Förderung von Erdöl aus.

Nach der primären Förderung kommt daher üblicherweise die sekundäre Förderung zum Einsatz. Bei der sekundären Förderung werden zusätzlich zu den Bohrlöchern, welche der Förderung des Erdöls dienen, den sogenannten Produktionsbohrungen, weitere Bohrlöcher in die erdölführende Formation gebohrt. Durch diese sogenannten Injektionsbohrungen wird Wasser in die Lagerstätte eingepresst (das sogenannte "Wasserfluten"), um den Druck aufrechtzuerhalten oder wieder zu erhöhen. Durch das Einpressen des Wassers wird das Erdöl durch die Hohlräume in der Formation langsam von der Injektionsbohrung ausgehend in Richtung der Produktionsbohrung gedrückt. Dies funktioniert aber nur so lange, wie die Hohlräume vollständig mit Öl gefüllt sind und das viskosere Öl durch das Wasser vor sich her geschoben wird. Sobald das dünnflüssige Wasser durch Hohlräume durchbricht, strömt es ab diesem Zeitpunkt auf dem Weg des geringsten Widerstandes, also durch den gebildeten Kanal und schiebt nicht mehr das Öl vor sich her. Mittels primärer und sekundärer Förderung sind daher im Regelfalle nur ca. 30 bis 35 % der in der Lagerstätte vorhandenen Erdölmenge zu fördern.

Nach den Maßnahmen der sekundären Erdölförderung werden daher auch Maßnahmen der tertiären Erdölförderung (auch bekannt als "Enhanced Oil Recovery (EOR)") zur weiteren Steigerung der Ölausbeute eingesetzt. Hierzu gehören Verfahren, bei denen man geeignete Chemikalien, wie Tenside und/oder Polymere als Hilfsmittel zur Ölförderung einsetzt. Eine Übersicht zur tertiären Ölförderung unter Einsatz von Chemikalien findet sich beispielsweise im Artikel von D. G. Kessel, Journal of Petroleum Science and Engineering, 2 (1989) 81 - 101.

Zu den Techniken der tertiären Erdölförderung gehört das so genannte "Polymerfluten". Beim Polymerfluten presst man durch die Injektionsbohrungen eine wässrige Lösung eines verdickend wirkenden Polymers in die Erdöllagerstätte ein, wobei die Viskosität der wässrigen Polymerlösung an die Viskosität des Erdöls angepasst ist. Durch das Einpressen der Polymerlösung wird das Erdöl wie beim Wasserfluten durch die genannten Hohlräume in der Formation von der Injektionsbohrung ausgehend in Richtung der Produktionsbohrung gedrückt, und das Erdöl wird über die Produktionsbohrung gefördert. Dadurch dass die Polymerformulierung aber etwa die gleiche Viskosität aufweist wie das Erdöl, wird die Gefahr verringert, dass die Polymerformulierung ohne Effekt zur Produktionsbohrung durchbricht, und somit erfolgt die Mobilisierung des Erdöls viel gleichmäßiger als bei der Verwendung von dünnflüssigem Wasser. Somit kann zusätzliches Erdöl in der Formation mobilisiert werden. Einzelheiten zum Polymerfluten sowie hierzu geeigneter Polymere sind beispielsweise in "Petroleum, Enhanced Oil Recovery, Kirk-Othmer, Encyclopedia of Chemical Technology, Online-Ausgabe, John Wiley & Sons, 2010" offenbart.

Zum Polymerfluten sind eine Vielzahl verschiedener, verdickend wirkender Polymere vorgeschlagen worden, insbesondere hochmolekulares Polyacrylamid, Copolymere aus Acrylamid und weiteren Comonomeren wie beispielsweise Vinylsulfonsäure oder Acrylsäure. Bei Polyacrylamid kann es sich insbesondere um teilhydrolysiertes Polyacrylamid handeln, bei dem ein Teil der Acrylamideinheiten zu Acrylsäure hydrolysiert ist. Weiterhin können auch natürlich vorkommende Polymere eingesetzt werden, wie beispielsweise Xanthan oder Polyglycosylglucan, wie beispielsweise von US 6, 392, 596 B1 oder CA 832 277 beschrieben.

Weiterhin ist es bekannt, hydrophob assoziierende Copolymere zum Polymerfluten einzusetzen. Hierunter versteht der Fachmann wasserlösliche Polymere, welche seiten- oder endständig hydrophobe Gruppen aufweisen, wie beispielsweise längere Alkylketten. In wässrigem Medium können derartige hydrophobe Gruppen mit sich selbst oder mit anderen hydrophobe Gruppen aufweisenden Stoffen assoziieren. Hierdurch wird ein assoziatives Netzwerk gebildet, durch das das Medium verdickt wird. Einzelheiten zur Verwendung hydrophob assoziierender Copolymere zur tertiären

Erdölförderung sind beispielsweise im Übersichtsartikel von Taylor, K.C. und Nasr-El-Din, H.A. in J. Petr. Sci. Eng. 1998, 19, 265-280 beschrieben.

EP 705 854 A1, DE 100 37 629 A1 und DE 10 2004 032 304 A1 offenbaren wasserlösliche, hydrophob assoziierende Copolymere und deren Verwendung, beispielsweise im Bereich der Bauchemie. Die beschriebenen Copolymere umfassen saure Monomere wie beispielsweise Acrylsäure, Vinylsulfonsäure, Acrylamidomethylpropansulfonsäure, basische Monomere wie Acrylamid, Dimethylacrylamid oder kationische Gruppen umfassenden Monomeren, wie beispielsweise Ammoniumgruppen aufweisende Monomere sowie weiterhin Monomere, welche das hydrophobes Assoziieren der einzelnen Polymerketten bewirken können.

Unsere ältere Anmeldung WO 2010/133527 A2 offenbart hydrophob assoziierende Copolymere, welche mindestens hydrophile, monoethylenisch ungesättigte Monomere wie beispielsweise Acrylamid sowie monoethylenisch ungesättigte hydrophob assoziierende Monomere umfassen. Die hydrophob assoziierenden Monomere haben eine Blockstruktur und weisen -in dieser Reihenfolge- eine ethylenisch ungesättigte Gruppe, optional eine verknüpfende Gruppe, einen ersten Polyoxyalkylenblock, welcher zu mindestens 50 mol % Ethylenoxygruppen umfasst sowie einen zweiten Polyoxyalkylenblock, welcher aus Alkylenoxygruppen mit mindestens 4 Kohlenstoffatomen besteht auf. Die Anmeldung offenbart die Verwendung derartiger Copolymere als Verdicker, beispielsweise zum Polymerfluten, für bauchemische Anwendungen oder für Waschmittelformulierungen.

Unsere ältere Anmeldung WO 2011/015520 A1 offenbart ein Verfahren zum Herstellen hydrophob assoziierender Copolymere durch Polymerisation wasserlöslicher, monoethylenisch ungesättigter oberflächenaktiver Monomere sowie monoethylenisch ungesättigten hydrophilen Monomeren in Gegenwart von Tensiden und die Verwendung derartiger Copolymere zum Polymerfluten.

Zum Polymerfluten wird eine wässrige Polymerlösung durch eine Bohrung (die sogenannte Injektionsbohrung) in eine Erdöllagerstätte verpresst, wobei die Viskosität der Polymerlösung unter Formationsbedingungen etwa der Viskosität des Erdöls entsprechen sollte. Geeignete Polymere für das Polymerfluten müssen daher die verdickende Wirkung auch unter den Bedingungen der Erdöllagerstätte aufweisen, also bei Temperaturen oberhalb Raumtemperatur sowie in Gegenwart von stark salzhaltigem Formationswasser. Formationswässer können im Extremfalle bis zu 35 Gew. % Salze enthalten. Bei den Salzen handelt es sich beispielsweise um Alkalimetallsalze aber auch Erdalkalimetallsalze. Formationstemperaturen können bis zu 150°C betragen.

Untersuchungen von teilhydrolysiertem Polyacrylamid und Copolymeren aus Acrylamid und Acrylamidomethylpropansulfonsäure zeigen, dass die Salztoleranz der Polymere durch den Einbau von Sulfonsäuregruppen gesteigert werden kann (siehe beispielsweise Masoud Rashidi, Anne Marit Blokhus, Arne Skauge, Journal of Applied Polymer Science, Vol. 117 (2010), Seiten1551 - 1557). Bei derartigen Polymeren nimmt jedoch die Viskosität mit zunehmender Temperatur ab. Somit müssen zum Erzielen einer zum Polymerfluten ausreichenden Viskosität höhere Mengen an Polymer eingesetzt werden, was die Wirtschaftlichkeit des Polymerflutens beeinträchtigt.

Aufgabe der Erfindung war es, ein Verfahren zum Polymerfluten bereit zu stellen, mit dem auch bei höheren Formationstemperaturen zufriedenstellende Ergebnisse erzielt werden.

Dementsprechend wurde ein Verfahren zur Erdölförderung gefunden, bei dem man eine wässrige Formulierung umfassend mindestens ein wasserlösliches, hydrophob assoziierendes Copolymer durch mindestens eine Injektionsbohrung in eine Erdöllagerstätte einpresst und der Lagerstätte durch mindestens eine Produktionsbohrung Rohöl entnimmt, und wobei

- das wasserlösliche, hydrophob assoziierende Copolymer

  (a) 0,1 bis 15 Gew.-% mindestens eines monoethylenisch ungesättigten, hydrophob assoziierenden Monomers (a) eines ausgewählt aus der Gruppe von

  $$H_2C{=}C(R^1)\text{-}R^2\text{-}O\text{-}(\text{-}CH_2\text{-}CH(R^3)\text{-}O\text{-})_k\text{-}(\text{-}CH_2\text{-}CH(R^4)\text{-}O\text{-})_l\text{-}R^5 \qquad (I),$$

  $$H_2C{=}C(R^1)\text{-}O\text{-}(\text{-}CH_2\text{-}CH(R^3)\text{-}O\text{-})_k\text{-}R^6 \qquad (II),$$

  $$H_2C{=}C(R^1)\text{-}(C{=}O)\text{-}O\text{-}(\text{-}CH_2\text{-}CH(R^3)\text{-}O\text{-})_k\text{-}R^6 \qquad (III),$$

  umfasst, wobei die Einheiten $-(-CH_2-CH(R^3)-O-)_k$ und $-(-CH_2-CH(R^4)-O-)_l$ in Blockstruktur in der in Formel (I) dargestellten Reihenfolge angeordnet sind und die Reste und Indices die folgende Bedeutung haben:

  k: eine Zahl von 15 bis 30,
  l: eine Zahl von 5 bis 25,
  $R^1$: H oder Methyl,
  $R^2$: eine Einfachbindung oder eine zweiwertige, verknüpfende Gruppe, ausgewählt aus der Gruppe von

$-(C_nH_{2n})-[R^{2a}]$, $-O-(C_{n'}H_{2n'})-[R^{2b}]$ und $-C(O)-O-(C_{n''}H_{2n''})-[R^{2c}]$, wobei n, n' und n" jeweils für eine natürliche Zahl von 1 bis 6 steht,

$R^3$: unabhängig voneinander H, Methyl oder Ethyl, mit der Maßgabe, dass es sich bei mindestens 75 mol % der Reste $R^3$ um H handelt,

$R^4$: unabhängig voneinander ein Kohlenwasserstoffrest mit mindestens 2 Kohlenstoffatomen oder eine Ethergruppe der allgemeinen Formel $-CH_2-O-R^{4'}$, wobei $R^{4'}$ für einen Kohlenwasserstoffrest mit mindestens 2 Kohlenstoffatomen steht,

$R^5$: H oder ein Kohlenwasserstoffrest mit 1 bis 30 C-Atomen,

$R^6$: ein aliphatischer und/oder aromatischer, geradkettiger oder verzweigter Kohlenwasserstoffrest mit 8 bis 40 Kohlenstoffatomen,

sowie weiterhin
(b) 85 bis 99,9 Gew. % mindestens zweier, davon verschiedener, monoethylenisch ungesättigter, hydrophiler Monomere (b) umfasst, wobei es sich bei den Monomeren (b) um

(b1) 30 bis 95 Gew. % mindestens eines neutralen, monethylenisch ungesättigten, hydrophilen Monomers (b1), ausgewählt aus der Gruppe von (Meth)acrylamid, N-Methyl(meth)acrylamid, N,N'-Dimethyl(meth)acrylamid oder N-Methylol(meth)acrylamid, sowie um

(b2) mindestens ein anionisches, monoethylenisch ungesättigtes, hydrophiles Monomer (b2), welches mindestens eine saure Gruppe ausgewählt aus der Gruppe von -COOH, $-SO_3H$ oder $-PO_3H_2$ bzw. deren Salze umfasst, wobei mindestens ein $-SO_3H$-Guppen umfassendes Monomer eingesetzt wird, handelt,

wobei die Mengenangaben jeweils auf die Gesamtmenge aller Monomere im Copolymer bezogen sind,

- das Copolymer ein gewichtsmittleres Molekulargewicht $M_W$ von $1*10^6$ g/mol bis $30*10^6$ g/mol aufweist,
- die Menge des Copolymers in der Formulierung 0,02 bis 2 Gew. % beträgt, und
- die Temperatur der Erdöllagerstätte 40°C bis 90°C beträgt.

In einer bevorzugten Ausführungsform umfasst die wässrige Formulierung weiterhin Salze in einer Menge von 20 000 ppm bis 350 000 ppm.

Überraschenderweise wurde gefunden, dass die Viskosität der für das Verfahren verwendeten wässrigen Polymerformulierungen mit steigender Temperatur zunächst nicht abnimmt, sondern sogar zunimmt. Die Viskosität durchläuft ein Maximum und beginnt erst bei höheren Temperaturen wieder abzunehmen. Hierdurch wird ein besonders gutes Verhältnis von erzielter Viskosität pro eingesetzter Stoffmenge erreicht.

Zur Erfindung ist im Einzelnen das Folgende auszuführen:

Eingesetzte hydrophob assoziierende Copolymere

Für das erfindungsgemäße Verfahren zur Erdölförderung wird eine wässrige Formulierung mindestens eines wasserlöslichen, hydrophob assoziierenden Copolymers eingesetzt und durch eine Injektionsbohrung in eine Erdöllagerstätte injiziert.

Der Begriff "hydrophob assoziierende Copolymere" ist dem Fachmann prinzipiell bekannt. Es handelt es sich hierbei um wasserlösliche Copolymere, welche neben hydrophilen Molekülteilen hydrophobe Gruppen aufweisen. In wässriger Lösung können die hydrophoben Gruppen mit sich selbst oder mit anderen, hydrophobe Gruppen aufweisenden Stoffen aufgrund zwischenmolekularer Kräfte assoziieren. Hierdurch entsteht ein durch zwischenmolekulare Kräfte geknüpftes polymeres Netzwerk, welches das wässrige Medium verdickt.

Im Idealfalle sollten die erfindungsgemäß verwendeten Copolymere in beliebigem Verhältnis mit Wasser mischbar sein. Erfindungsgemäß ist es aber ausreichend, wenn die Copolymere zumindest bei der gewünschten Einsatzkonzentration und beim gewünschten pH wasserlöslich sind. Im Regelfalle sollte die Löslichkeit des Copolymers in Wasser bei Raumtemperatur bei den Einsatzbedingungen mindestens 25 g/l betragen.

Erfindungsgemäß umfasst das wasserlösliche, hydrophob assoziierende Copolymer 0,1 bis 15 Gew.-% mindestens eines monoethylenisch ungesättigten, hydrophob assoziierenden Monomers (a) sowie 85 bis 99,9 Gew. % mindestens zweier, davon verschiedener, monoethylenisch ungesättigter, hydrophiler Monomere (b). Darüber hinaus können optional weitere von den Monomeren (a) und (b) verschiedene, ethylenisch ungesättigte, bevorzugt monoethylenisch ungesättigte Monomere (c) in einer Menge von bis zu 14,9 Gew. % vorhanden sein. Die genannten Mengenangaben beziehen sich jeweils auf die Summe aller Monomere im Copolymer. Bevorzugt werden ausschließlich monoethylenisch ungesättigte Monomere eingesetzt.

Monomere (a)

Das eingesetzte wasserlösliche, hydrophob assoziierende Copolymer umfasst mindestens ein monoethylenisch ungesättigtes Monomer (a), welches dem Copolymer hydrophob assoziierende Eigenschaften verleiht und daher im Folgenden als "hydrophob assoziierendes Monomer" bezeichnet werden soll. Erfindungsgemäß werden die Monomere (a) ausgewählt aus der Gruppe von

$$H_2C{=}C(R^1)\text{-}R^2\text{-}O\text{-}(\text{-}CH_2\text{-}CH(R^3)\text{-}O\text{-})_k\text{-}(\text{-}CH_2\text{-}CH(R^4)\text{-}O\text{-})_l\text{-}R^5 \qquad (I),$$

$$H_2C{=}C(R^1)\text{-}O\text{-}(\text{-}CH_2\text{-}CH(R^3)\text{-}O\text{-})_k\text{-}R^6 \qquad (II),$$

$$H_2C{=}C(R^1)\text{-}(C{=}O)\text{-}O\text{-}(\text{-}CH_2\text{-}CH(R^3)\text{-}O\text{-})_k\text{-}R^6 \qquad (III).$$

Monomere (a) der Formel (I)

Bei den Monomeren (a) der Formel (I) ist eine ethylenische Gruppe $H_2C{=}C(R^1)$- über eine zweiwertige, verknüpfende Gruppe -$R^2$-O- mit einem Polyoxyalkylenrest mit Blockstruktur $-(-CH_2-CH(R^3)-O-)_k-(-CH_2-CH(R^4)-O-)_l-R^5$ verbunden, wobei die beiden Blöcke $-(-CH_2-CH(R^3)-O-)_k$ und $-(-CH_2-CH(R^4)-O-)_l$ in der in Formel (I) dargestellten Reihenfolge angeordnet sind. Der Polyoxyalkylenrest weist entweder eine terminale OH-Gruppe (für $R^5$ = H)oder eine terminale Ethergruppe -$OR^5$ auf (wenn es sich bei $R^5$ um einen Kohlenwasserstoffrest handelt).

In der oben genannten Formel steht $R^1$ für H oder eine Methylgruppe.

$R^2$ steht für eine Einfachbindung oder eine zweiwertige, verknüpfende Gruppe, ausgewählt aus der Gruppe von $-(C_nH_{2n})-$ [Gruppe $R^{2a}$], $-O-(C_{n'}H_{2n'})-$ [Gruppe $R^{2b}$]- und $-C(O)-O-(C_{n''}H_{2n''})-$[Gruppe $R^{2c}$]. In den genannten Formeln stehen n, n' und n" jeweils für eine natürliche Zahl von 1 bis 6. Mit anderen Worten gesagt handelt es sich bei der verknüpfenden Gruppe um geradkettige oder verzweigte aliphatische Kohlenwasserstoffgruppen mit 1 bis 6 Kohlenwasserstoffatomen, welche entweder direkt, über eine Ethergruppe -O- oder über eine Esterguppe -C(O)-O- mit der ethylenischen Gruppe $H_2C{=}C(R^1)$- verknüpft sind. Bevorzugt handelt es sich bei den Gruppen $-(C_nH_{2n})-$, $-(C_{n'}H_{2n'})-$ und $-(C_{n''}H_{2n''})-$ um lineare aliphatische Kohlenwasserstoffgruppen.

Bevorzugt handelt es sich bei der Gruppe $R^{2a}$ um eine Gruppe ausgewählt aus $-CH_2-$, $-CH_2-CH_2-$ und $-CH_2-CH_2-CH_2-$, besonders bevorzugt ist eine Methylengruppe $-CH_2-$.

Bevorzugt handelt es sich bei der Gruppe $R^{2b}$ um eine Gruppe ausgewählt aus $-O-CH_2-CH_2-$, $-O-CH_2-CH_2-CH_2-$ und $-O-CH_2-CH_2-CH_2-CH_2-$, besonders bevorzugt ist $-O-CH_2-CH_2-CH_2-CH_2-$.

Bevorzugt handelt es sich bei der Gruppe $R^{2c}$ um eine Gruppe ausgewählt aus $-C(O)-O-CH_2-CH_2-$,$-C(O)O-CH(CH_3)-CH_2-$, $-C(O)O-CH_2-CH(CH_3)-$, $-C(O)O-CH_2-CH_2-CH_2-CH_2-$ und $-C(O)O-CH_2-CH_2-CH_2-CH_2-CH_2-CH_2-$, besonders bevorzugt sind $-C(O)-O-CH_2-CH_2-$ und $-C(O)O-CH_2-CH_2-CH_2-CH_2-$ und ganz besonders bevorzugt ist $-C(O)-O-CH_2-CH_2-$.

Besonders bevorzugt handelt es sich bei der Gruppe $R^2$ um eine Gruppe $R^{2a}$ oder $R^{2b}$, besonders bevorzugt um eine Gruppe $R^{2b}$.

Weiterhin besonders bevorzugt handelt es sich bei $R^2$ um eine Gruppe ausgewählt aus $-CH_2-$ oder $-O-CH_2-CH_2-CH_2-CH_2-$, ganz besonders bevorzugt ist $-O-CH_2-CH_2-CH_2-CH_2-$.

Die Monomere (I) weisen weiterhin einen Polyoxyalkylenrest auf, der aus den Einheiten $-(-CH_2-CH(R^3)-O-)_k$ und $-(-CH_2-CH(R^4)-O-)_l$ besteht, wobei die Einheiten in Blockstruktur in der in Formel (I) dargestellten Reihenfolge angeordnet sind. Der Übergang zwischen den beiden Blöcken kann abrupt oder auch kontinuierlich erfolgen.

Im Block $-(-CH_2-CH(R^3)-O-)_k$ stehen die Reste $R^3$ unabhängig voneinander für H, Methyl oder Ethyl, bevorzugt H oder Methyl mit der Maßgabe, dass es sich bei mindestens 75 mol % der Reste $R^3$ um H handelt. Bevorzugt handelt es sich bei mindestens 90 mol % der Reste $R^3$ um H, und besonders bevorzugt ausschließlich um H. Bei dem genannten Block handelt es sich also um einen Polyoxyethylenblock, der optional noch gewisse Anteile Propylenoxid- und/oder Butylenoxideinheiten aufweisen kann, bevorzugt um einen reinen Polyoxyethylenblock.

Bei der Anzahl der Alkylenoxideinheiten k handelt es sich um eine Zahl von 15 bis 30, bevorzugt 20 bis 30 und beispielsweise ca. 22 bis 25. Für den Fachmann auf dem Gebiet der Polyalkylenoxide ist klar, dass es sich bei den genannten Zahlen um Mittelwerte von Verteilungen handelt.

Beim dem zweiten Block $-(-CH_2-CH(R^4)-O-)_l-$ stehen die Reste $R^4$ unabhängig voneinander für Kohlenwasserstoffstoffreste von mindestens 2 Kohlenstoffatomen, bevorzugt mindestens 3, besonders bevorzugt 3 bis 10 und ganz besonders bevorzugt 3 bis 8 Kohlenstoffatomen und beispielsweise 3 bis 4 Kohlenstoffatomen. Es kann sich hierbei

um einen aliphatischen und/oder aromatischen, linearen oder verzweigten Kohlenstoffrest handeln. Bevorzugt handelt es sich um aliphatische Reste.

Beispiele geeigneter Reste $R^4$ umfassen Ethyl, n-Propyl, n-Butyl, n-Pentyl, n-Hexyl, n-Heptyl, n-Octyl, n-Nonyl oder n-Decyl sowie Phenyl. Beispiele bevorzugter Reste umfassen n-Propyl, n-Butyl, n-Pentyl und besonders bevorzugt ist ein n-Propylrest.

Bei den Resten $R^4$ kann es sich weiterhin um Ethergruppen der allgemeinen Formel $-CH_2-O-R^{4'}$ handeln, wobei es sich bei $R^{4'}$ um einen aliphatischen und/oder aromatischen, linearen oder verzweigten Kohlenwasserstoffrest mit mindestens 2 Kohlenstoffatomen, bevorzugt mindestens 3 und besonders bevorzugt 3 bis 10 Kohlenstoffatomen handelt. Beispiele für Reste $R^{3'}$ umfassen n-Propyl, n-Butyl, n-Pentyl, n-Hexyl, 2-Ethylhexyl, n-Heptyl, n-Octyl, n-Nonyl n-Decyl oder Phenyl.

Bei dem Block $-(-CH_2-CH(R^4)-O-)_l-$ handelt es sich also um einen Block, der aus Alkylenoxideinheiten mit mindestens 4 Kohlenstoffatomen, bevorzugt mindestens 5 Kohlenstoffatomen, insbesondere 5 bis 10 Kohlenstoffatomen, und/oder Glycidylethern mit einer Ethergruppe von mindestens 2, bevorzugt mindestens 3 Kohlenstoffatomen besteht. Bevorzugt als Reste $R^3$ sind die genannten Kohlenwasserstoffeste; bei den Bausteinen des zweiten terminalen Block handelt es sich besonders bevorzugt um mindestens 5 Kohlenstoffatome umfassende Alkylenoxideinheiten, wie Pentenoxideinheiten oder Einheiten höherer Alkylenoxide.

Bei der Anzahl der Alkylenoxideinheiten l handelt es sich um eine Zahl von 5 bis 25, bevorzugt 6 bis 20, besonders bevorzugt 8 bis 18, ganz besonders bevorzugt 10 bis 15 und beispielsweise ca. 12.

Bei dem Rest $R^5$ handelt es sich um H oder einen bevorzugt aliphatischen Kohlenwasserstoffrest mit 1 bis 30 C-Atomen, bevorzugt 1 bis 10 und besonders bevorzugt 1 bis 5 C-Atomen. Bevorzugt handelt es sich bei $R^5$ um H, Methyl oder Ethyl, besonders bevorzugt um H oder Methyl und ganz besonders bevorzugt um H.

Bei den Monomeren der Formel (I) ist also eine terminale, monoethylenische Gruppe mit einer Polyoxyalkylengruppe mit Blockstruktur verknüpft, und zwar zunächst mit einem hydrophilen, Polyethylenoxideinheiten aufweisenden Block und dieser wiederum mit einem zweiten terminalen, hydrophoben Block, welcher mindestens aus Butenoxiddeinheiten, bevorzugt mindestens Pentenoxideinheiten oder Einheiten höherer Alkylenoxide wie beispielsweise Dodecenoxid aufgebaut ist. Der zweite Block weist eine terminale $-OR^5$-Gruppe, insbesondere eine OH-Gruppe auf. Der terminale Block $-(-CH_2-CH(R^4)-O-)_l$ mit den Resten $R^4$ ist für das hydrophobe Assoziieren der unter Verwendung der Monomere (a) hergestellten Copolymere verantwortlich. Verethern der OH-Endgruppe ist eine Option, welche vom Fachmann je nach den gewünschten Eigenschaften des Copolymers gewählt werden kann. Eine terminale Kohlenwasserstoffgruppe ist für das hydrophobe Assoziieren aber nicht erforderlich, sondern das hydrophobe Assoziieren funktioniert auch bei einer terminalen OH-Gruppe.

Für den Fachmann auf dem Gebiet von Polyalkylenoxid-Blockcopolymeren ist klar, dass der Übergang zwischen den beiden Blöcken je nach der Art der Herstellung abrupt oder auch kontinuierlich erfolgen kann. Bei einem kontinuierlichen Übergang befindet sich zwischen den beiden Blöcken noch eine Übergangzone, welche Monomere beider Blöcke umfasst. Wenn man die Blockgrenze auf die Mitte der Übergangzone festlegt, kann dem entsprechend der erste Block$-(-CH_2-CH(R^3)-O-)_k$ noch geringe Mengen an Einheiten $-CH_2-CH(R^4)-O-$ und der zweite Block $-(-CH_2-CH(R^4)-O-)_l$-geringe Mengen an Einheiten $-CH_2-CH(R^3)-O-$ aufweisen, wobei diese Einheiten aber nicht statistisch über den Block verteilt sind, sondern in der genannten Übergangszone angeordnet sind.

Herstellung der Monomere (a) der Formel (I)

Die Herstellung der hydrophob assoziierenden Monomere (a) der Formel (I) kann nach dem Fachmann prinzipiell bekannten Methoden erfolgen.

Zur Herstellung der Monomere (a) geht man in einem bevorzugten Herstellverfahren von geeigneten monoethylenisch ungesättigten Alkoholen (IV) aus, welche anschließend in einem zweistufigen Prozess alkoxyliert werden, so dass die erwähnte Blockstruktur erhalten wird. Man erhält Monomere (a) der Formel (I) mit $R^5 = H$. Diese können optional in einem weiteren Verfahrensschritt verethert werden.

Die Art der zu verwendenden ethylenisch ungesättigten Alkohole (IV) richtet sich hierbei insbesondere nach der Gruppe $R^2$.

Sofern $R^2$ für eine Einfachbindung steht, geht man von Alkoholen (IV) der allgemeinen Formel $H_2C=C(R^1)-O-(-CH_2-CH(R^7)-O-)_d-H$ (IVa), wobei $R^1$ die oben definierte Bedeutung hat, $R^7$ für H und/oder $CH_3$, bevorzugt H und d für eine Zahl von 1 bis 5, bevorzugt 1 oder 2 steht. Beispiele derartiger Alkohole umfassen Diethylenglykolvinylether $H_2C=CH-O-CH_2-CH_2-O-CH_2-CH_2-OH$ oder Dipropylenglykolvinylether $H_2C=CH-O-CH_2-CH(CH_3)-O-CH_2-CH(CH_3)-OH$, bevorzugt ist Diethylenglykolvinylether.

Zur Herstellung von Monomeren (a) bei denen $R^2$ nicht für eine Einfachbindung steht, können Alkohole der allgemeinen Formel $H_2C=C(R^1)-R^2-OH$ (IVb) oder bereits Alkoxygruppen aufweisende Alkoholen der Formel $H_2C=C(R^1)-R^2-O-(-CH_2-CH(R^7)-O-)_d-H$ (IVc) eingesetzt werden, wobei $R^7$ und d die oben definierte Bedeutung haben, und $R^2$ jeweils aus der Gruppe von $R^{2a}$, $R^{2b}$ und $R^{2c}$ gewählt wird.

Zur Herstellung der Monomere mit verknüpfender Gruppe $R^{2a}$ geht bevorzugt man von Alkoholen der Formel $H_2C=C(R^1)-(C_nH_{2n})-OH$, insbesondere $H_2C=CH-(C_nH_{2n})-OH$ oder Alkoholen der Formel $H_2C=C(R^1)-O-(-CH_2-CH(R^7)-O-)_d-H$ aus. Beispiele bevorzugter Alkohole umfassen Allylalkohol $H_2C=CH-CH_2-OH$ oder Isoprenol $H_2C=C(CH_3)-CH_2-CH_2-OH$.

Zur Herstellung der Monomere mit verknüpfender Gruppe $R^{2b}$ geht man von Vinylethern der Formel $H_2C=C(R^1)-O-(C_{n'}H_{2n'})-OH$, bevorzugt $H_2C=CH-O-(C_{n'}H_{2n'})-OH$ aus. Besonders bevorzugt kann ω-Hydroxybutylvinylether $H_2C=CH-O-CH_2-CH_2-CH_2-CH_2-OH$ eingesetzt werden.

Zur Herstellung der Monomere mit verknüpfender Gruppe $R^{2c}$ geht man von Hydroxyalkyl(meth)acrylaten der allgemeinen Formel $H_2C=C(R^1)-C(O)-O-(C_{n''}H_{2n''})-OH$, bevorzugt $H_2C=C(R^1)-C(O)-O-(C_{n''}H_{2n''})-OH$ aus. Beispiele bevorzugter Hydroxyalkyl(meth)acrylate umfassen Hydroxyethyl(meth)acrylat $H_2C=C(R^1)-C(O)-O-CH_2-CH_2-OH$ sowie Hydroxybutyl(meth)acrylat $H_2C=C(R^1)-C(O)-O-CH_2-CH_2-CH_2-CH_2-OH$.

Die genannten Ausgangsverbindungen werden alkoxyliert, und zwar in einem zweistufigen Prozess zunächst mit Ethylenoxid, optional im Gemisch mit Proyplenoxid und/oder Butylenoxid und in einem zweiten Schritt mit Alkylenoxiden der allgemeinen Formeln (Xa) bzw. (Xb)

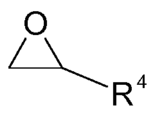 (Xa) 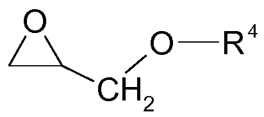 (Xb)

wobei $R^4$ in (Xa) bzw. $R^{4'}$ in (Xb) die eingangs definierte Bedeutung haben.

Die Durchführung einer Alkoxylierung einschließlich der Herstellung von Blockcopolymeren aus verschiedenen Alkylenoxiden ist dem Fachmann prinzipiell bekannt. Es ist dem Fachmann ebenfalls bekannt, dass man durch die Reaktionsbedingungen, insbesondere die Wahl des Katalysators, die Molekulargewichtsverteilung der Alkoxylate sowie die Orientierung von Alkylenoxideinheiten in einer Polyetherkette beeinflussen kann.

Die Alkoxylate können beispielsweise durch basenkatalysierte Alkoxylierung hergestellt werden. Dazu kann der als Ausgangsmaterial verwendete Alkohol in einem Druckreaktor mitAlkalihydroxiden, bevorzugt Kaliumhydroxid oder mit Alkalialkoholaten wie beispielsweise Natriummethylat versetzt werden. Durch verminderten Druck (bspw. <100 mbar) und/oder Erhöhung der Temperatur (30 bis 150°C) kann noch in der Mischung vorhandenes Wasser abgezogen werden. Der Alkohol liegt danach als das entsprechende Alkoholat vor. Anschließend wird mit Inertgas (z.B. Stickstoff) inertisiert und ein einem ersten Schritt Ethylenoxid, optional im Gemisch mit Propylen- und/oder Butylenoxid bei Temperaturen von 60 bis 180°C, bevorzugt 130 bis 150°C schrittweise zugegeben. Die Zugabe erfolgt typischerweise innerhalb von 2 bis 5 h, ohne dass die Erfindung darauf beschränkt sein soll. Nach Beendigung der Zugabe lässt man das Reaktionsgemisch zweckmäßigerweise nachreagieren, beispielsweise für ½ h bis 1 h. In einem zweiten Schritt dosiert man anschließend Alkylenoxide der allgemeinen Formel (Xb) schrittweise zu. Die Reaktionstemperatur in der zweiten Stufe kann beibehalten werden oder auch verändert werden. Bewährt hat sich eine um ca. 10 bis 25°C niedrigere Reaktionstemperatur als in der ersten Stufe.

Die Alkoxylierung kann auch mittels Techniken vorgenommen werden, welche zu engeren Molekulargewichtsverteilungen führen als bei der basenkatalysierten Synthese. Hierzu können als Katalysator beispielsweise Doppelhydroxidtone wie in DE 43 25 237 A1 beschrieben eingesetzt werden. Die Alkoxylierung kann besonders bevorzugt unter Verwendung von Doppelmetallcyanid-Katalysatoren (DMC-Katalysatoren) erfolgen. Geeignete DMC-Katalysatoren sind beispielsweise in der DE 102 43 361 A1, insbesondere den Abschnitten [0029] bis [0041] sowie der darin zitierten Literatur offenbart. Beispielsweise können Katalysatoren vom Zn-Co-Typ eingesetzt werden. Zur Durchführung der Reaktion kann der als Ausgangsmaterial verwendete Alkohol mit dem Katalysator versetzt werden, die Mischung wie oben beschrieben entwässert und mit den Alkylenoxiden wie beschrieben umgesetzt werden. Üblicherweise werden nicht mehr als 250 ppm Katalysator bzgl. der Mischung eingesetzt, und der Katalysator kann aufgrund dieser geringen Menge im Produkt verbleiben.

Die Alkoxylierung kann weiterhin auch säurekatalysiert vorgenommen werden. Bei den Säuren kann es sich um Brönstedt- oder Lewissäuren handeln. Zur Durchführung der Reaktion kann der als Ausgangsmaterial verwendete Alkohol mit dem Katalysator versetzt, die Mischung wie oben beschrieben entwässert werden und mit den Alkylenoxiden wie beschrieben umgesetzt werden. Am Ende der Reaktion kann der saure Katalysator durch Zugabe einer Base, beispielsweise KOH oder NaOH neutralisiert und bei Bedarf abfiltriert werden.

Für den Fachmann auf dem Gebiet der Polyalkylenoxide ist klar, dass die Orientierung der Kohlenwasserstoffeste $R^4$ sowie gegebenenfalls $R^3$ von den Bedingungen der Alkoxylierung abhängen kann, beispielsweise vom zur Alkoxylierung gewählten Katalysator. Die Alkylenoxidgruppen können also sowohl in der Orientierung $-(-CH_2-CH(R^4)-O-)$ oder auch in inverser Orientierung $-(-CH(R^4)-CH_2-O-)-$ in das Monomer eingebaut werden. Die Darstellung in Formel (I) soll daher nicht als auf eine bestimmte Orientierung der Gruppen $R^3$ bzw. $R^4$ beschränkt angesehen werden.

Sofern die terminale OH-Gruppe der Monomere (a) der Formel (I) (d.h. $R^5$ = H) verethert werden sollen, kann

dies mit dem Fachmann prinzipiell bekannten, üblichen Alkylierungsmitteln erfolgen, beispielsweise Alkylsulfaten. Zur Veretherung kann insbesondere Dimethylsulfat oder Diethylsulfat eingesetzt werden.

Das beschriebene bevorzugte Herstellverfahren für die Monomere (I) hat den Vorteil, dass die Bildung möglicherweise vernetzend wirkender Nebenprodukte mit zwei ethylenisch ungesättigten Gruppen weitgehend vermieden wird. Dementsprechend lassen sich Copolymere mit besonders niedrigem Gelanteil erhalten.

Monomere (a) der Formeln (II) und (III)

Bei den Monomeren der Formeln (II) und (III) haben $R^1$, $R^3$ und k die bereits geschilderte Bedeutung.

$R^6$ steht für einen aliphatischen und/oder aromatischen, geradkettigen oder verzweigten Kohlenwasserstoffrest mit 8 bis 40 Kohlenstoffatomen, bevorzugt 12 bis 32 C-Atomen. Beispielsweise kann es sich um n-Alkylgruppen wie n-Octyl-, n-Decyl- oder n-Dodecylgruppen, Phenylgruppen sowie insbesondere substituierte Phenylgruppen handeln. Bei Substituenten an den Phenylgruppen kann es sich um Alkylgruppen, beispielsweise $C_1$- bis $C_6$-Alkylgruppen handeln, bevorzugt um Styrylgruppen. Besonders bevorzugt ist eine Tristyrylphenylgruppe.

Die hydrophob assoziierenden Monomere der Formeln (II) bzw. (III) und deren Herstellung sind dem Fachmann prinzipiell bekannt, beispielsweise aus EP 705 854 A1.

Mengen der Monomere (a)

Die Menge der monoethylenisch ungesättigten, hydrophob assoziierenden Monomere (a) beträgt 0,1 bis 15 Gew.-% bezogen auf die Gesamtmenge aller Monomere im Copolymer, insbesondere 0,1 bis 10 Gew.-%, bevorzugt 0,2 bis 5 Gew.-% und besonders bevorzugt 0,5 bis 2 Gew.-%.

Besonders bevorzugt werden Monomere (a) der allgemeinen Formel (I) zur Herstellung der erfindungsgemäßen Copolymere eingesetzt, ganz besonders bevorzugt Monomere (a) der allgemeinen Formel (I), bei denen $R^2$ für einen Rest $R^{2b}$ steht.

Monomere (b)

Über die Monomere (a) hinaus umfasst das erfindungsgemäß verwendete, hydrophob assoziierende Copolymer mindestens zwei, davon verschiedene, monoethylenisch ungesättigte, hydrophile Monomere (b).

Besonders bevorzugt sind die eingesetzten, hydrophilen Monomere (b) in beliebigem Verhältnis mit Wasser mischbar, zur Ausführung der Erfindung ist es jedoch ausreichend, dass das erfindungsgemäße, hydrophob assoziierende Copolymer die eingangs erwähnte Wasserlöslichkeit besitzt. Im Regelfalle sollte die Löslichkeit der Monomere (b) in Wasser bei Raumtemperatur mindestens 50 g/l, bevorzugt mindestens 150 g/l und besonders bevorzugt mindestens 250 g/l betragen.

Erfindungsgemäß umfasst das Copolymer 30 bis 95 Gew. % mindestens eines neutralen, monethylenisch ungesättigten, hydrophilen Monomers (b1), ausgewählt aus der Gruppe von (Meth)acrylamid, N-Methyl(meth)acrylamid, N,N'-Dimethyl(meth)acrylamid oder N-Methylol(meth)acrylamid. Bevorzugt handelt es sich um (Meth)acrylamid, insbesondere um Acrylamid. Sofern Gemische verschiedener Monomere (b1) eingesetzt werden, sollte es sich bei zumindest 50 mol % der Monomere (b1) um (Meth)acrylamid, bevorzugt Acrylamid handeln.

Erfindungsgemäß umfasst das verwendete Copolymer weiterhin mindestens ein hydrophiles, monoethylenisch ungesättigtes anionisches Monomer (b2), welches mindestens eine saure Gruppe ausgewählt aus der Gruppe von $-COOH$, $-SO_3H$ oder $-PO_3H_2$ bzw. deren Salze umfasst. Bevorzugt sind COOH-Gruppen und/oder $-SO_3H$-Gruppen umfassende Monomere, besonders bevorzugt $-SO_3H$-Gruppen umfassende Monomere. Selbstverständlich kann es sich auch um die Salze der sauren Monomere handeln. Geeignete Gegenionen umfassen insbesondere Alkalimetallionen wie $Li^+$, $Na^+$ oder $K^+$ sowie Ammoniumionen wie $NH_4^+$ oder Ammoniumionen mit organischen Resten.

Beispiele COOH-Gruppen umfassender Monomere umfassen Acrylsäure, Methacrylsäure, Crotonsäure, Itaconsäure, Maleinsäure oder Fumarsäure. Bevorzugt ist Acrylsäure.

Beispiele Sulfonsäuregruppen umfassender Monomere umfassen Vinylsulfonsäure, Allylsulfonsäure, 2-Acrylamido-2-methylpropansulfonsäure, 2-Methacrylamido-2-methylpropansulfonsäure, 2-Acrylamidobutansulfonsäure, 3-Acrylamido-3-methylbutansulfonsäure oder 2-Acrylamido-2,4,4-trimethylpentansulfonsäure. Bevorzugt sind Vinylsulfonsäure, Allylsulfonsäure oder 2-Acrylamido-2-methylpropansulfonsäure und besonders bevorzugt ist oder 2-Acrylamido-2-methylpropansulfonsäure.

Beispiele Phosphonsäuregruppen umfassender Monomere umfassen Vinylphosphonsäure, Allylphosphonsäure, N-(Meth)acrylamidoalkylphosphonsäuren oder (Meth)acryloyloxyalkylphosphonsäuren, bevorzugt ist Vinylphosphonsäure.

Der Vollständigkeit halber sei erwähnt, dass die Monomere (b1) im Zuge der Herstellung und Verwendung unter Umständen zumindest teilweise zu (Meth)acrylsäure hydrolysieren können. Die erfindungsgemäß verwendeten

Copolymere können dementsprechend (Meth)acrylsäureeinheiten umfassen, auch wenn zur Synthese gar keine (Meth)acrylsäureeinheiten eingesetzt wurden. Die Tendenz zur Hydrolyse der Monomere (b1) nimmt mit zunehmendem Gehalt an Sulfonsäuregruppen ab. Dementsprechend handelt es sich bei den erfindungsgemäß verwendeten Copolymeren bei mindestens einem der Monomere (b2) um ein Sulfonsäuregruppen umfassendes Monomer.

Die erfindungsgemäß verwendeten Copolymere können darüber hinaus optional mindestens ein monoethylenisch ungesättigtes, kationisches, Ammoniumionen aufweisendes Monomer (b3) umfassen.

Geeignete kationische Monomere (b3) umfassen insbesondere Ammoniumgruppen aufweisende Monomere, insbesondere Ammoniumderivate von N-(ω-Aminoalkyl)(meth)acrylamiden oder ω-Aminoalkyl(meth)acrylestern.

Insbesondere kann es sich bei Ammoniumgruppen aufweisenden Monomeren (b3) um Verbindungen der allgemeinen Formeln $H_2C=C(R^8)\text{-}CO\text{-}NR^9\text{-}R^{10}\text{-}NR^{11}{}_3{}^+ X^-$ (Va) und/oder $H_2C=C(R^8)\text{-}COO\text{-}R^{10}\text{-}NR^{11}{}_3{}^+ X^-$ (Vb) handeln. Hierbei steht $R^8$ für H oder Methyl, $R^9$ für H oder eine $C_1$- bis $C_4$-Alkylgruppe, bevorzugt H oder Methyl und $R^{10}$ für eine bevorzugt lineare $C_1$- bis $C_4$-Alkylengruppe, beispielsweise eine 1,2-Ethylengruppe $-CH_2-CH_2-$ oder eine 1,3-Proplyengruppe $-CH_2-CH_2-CH_2-$.

Bei den Resten $R^{11}$ handelt es sich unabhängig voneinander um $C_1$- bis $C_4$-Alkylreste, bevorzugt Methyl oder eine Gruppe der allgemeinen Formel $-R^{12}-SO_3H$, wobei $R^{12}$ für eine bevorzugt lineare $C_1$- bis $C_4$-Alkylengruppe oder eine Phenylgruppe steht, mit der Maßgabe, dass es sich im Regelfalle bei nicht mehr als einem der Substituenten $R^{11}$ um einen Sulfonsäuregruppen aufweisenden Substituenten handelt. Besonders bevorzugt handelt es sich bei den drei Substituenten $R^{11}$ um Methylgruppen, d.h. das Monomer weist eine Gruppe $-N(CH_3)_3{}^+$ auf. $X^-$ steht in obiger Formel für ein einwertiges Anion, beispielsweise $Cl^-$. Selbstverständlich kann $X^-$ auch für einen entsprechenden Bruchteil eines mehrwertigen Anions stehen, obwohl dies nicht bevorzugt ist. Beispiele bervorzugter Monomere (b3) der allgemeinen Formel (Va) bzw. (Vb) umfassen Salze von 3-Trimethylammonium-propyl(meth)acrylamiden oder 2-Trimethylammoniumethyl(meth)acrylaten, beispielsweise die entsprechenden Chloride wie 3-Trimethylammoniumpropylacrylamidchlorid (DIMAPAQUAT) und 2-Trimethylammoniumethylmethacrylatchlorid (MADAME-QUAT).

Die erfindungsgemäß verwendeten Copolymere können darüber hinaus noch weitere, von den hydrophilen Monomeren (b1), (b2) und (b3) verschiedene monoethylenisch ungesättigte hydrophile Monomere (b4) umfassen. Beispiele derartiger Monomere umfassen Hydroxy- und oder Hydroxy- und/oder Ethergruppen umfassende Monomere, wie beispielsweise Hydroxyethyl(meth)acrylat, Hydroxypropyl(meth)acrylat, Allylalkohol, Hydroxyvinylethylether, Hydroxyvinylpropylether, Hydroxyvinylbutylether oder Verbindungen der Formel $H_2C=C(R^1)\text{-}COO\text{-}(\text{-}CH_2\text{-}CH(R^{13})\text{-}O\text{-})_b\text{-}R^{14}$ (VIa) bzw. $H_2C=C(R^1)\text{-}O\text{-}(\text{-}CH_2\text{-}CH(R^{13})\text{-}O\text{-})_b\text{-}R^{14}$ (VIb) wobei $R^1$ wie oben definiert ist und b für eine Zahl von 2 bis 200, bevorzugt 2 bis 100 steht. Bei den Resten $R^{13}$ handelt es sich unabhängig voneinander um H, Methyl oder Ethyl, bevorzugt H oder Methyl, mit der Maßgabe, dass es sich bei mindestens 50 mol % der Reste $R^{13}$ um H handelt. Bevorzugt handelt es sich bei mindestens 75 mol % der Reste $R^{13}$ um H, besonders bevorzugt bei mindestens 90 mol % und ganz besonders bevorzugt ausschließlich um H. Bei dem Rest $R^{14}$ handelt es sich um H, Methyl oder Ethyl, bevorzugt H oder Methyl. Weitere Beispiele von Monomeren (b4) umfassen N-Vinylderivate wie beispielsweise N-Vinylformamid, N-Vinylacetamid, N-Vinylpyrrolidon oder N-Vinylcaprolactam sowie Vinylester, wie beispielsweise Vinylformiat oder Vinylacetat. N-Vinylderivate können nach Polymerisation zu Vinylamin-Einheiten, Vinylester zu Vinylalkohol-Einheiten hydrolysiert werden.

Die Menge aller hydrophilen Monomere (b) im erfindungsgemäßen Copolymer beträgt erfindungsgemäß 85 bis 99,9 Gew.-% bezogen auf die Gesamtmenge aller Monomere im Copolymer, bevorzugt 90 bis 99,8 Gew.-%.

Die Menge der neutralen, hydrophilen Monomere (b1) beträgt hierbei 30 bis 95 Gew. %, bevorzugt 30 bis 85 Gew. % und besonders bevorzugt 30 bis 70 Gew. % bezüglich der Gesamtmenge aller eingesetzten Monomere.

Sofern das Copolymer nur neutrale Monomere (b1) und anionische Monomere (b2) umfasst, hat es sich bewährt, neben den neutralen Monomeren (b1) in einer Menge 30 bis 95 Gew. % die anionischen Monomere (b2) in einer Menge von 4,9 bis 69,9 Gew. % einzusetzen, wobei die Menge jeweils auf die Gesamtmenge aller eingesetzten Monomere bezogen ist. Bevorzugt werden bei dieser Ausführungsform die Monomere (b1) in einer Menge 30 bis 80 Gew. % und die anionischen Monomere (b2) in einer Menge von 19,9 bis 69,9 Gew. % eingesetzt, und besonders bevorzugt werden die Monomere (b1) in einer Menge 40 bis 70 Gew. % und die anionischen Monomere (b2) in einer Menge von 29,9 bis 59,9 Gew. % eingesetzt

Sofern das Copolymer neutrale Monomere (b1), anionische Monomere (b2) und kationische Monomere (b3) umfasst, hat es sich bewährt, neben den neutralen Monomeren (b1) in einer Menge von 30 bis 95 Gew. % die anionischen (b2) und kationischen Monomere (b3) zusammen in einer Menge von 4,9 bis 69,9 Gew. % einzusetzen, mit der Maßgabe, dass das molare Verhältnis (b2) / (b3) 0,7 bis 1,3 beträgt. Bevorzugt beträgt das molare Verhältnis (b2) / (b3) 0,8 bis 1,2 und beispielsweise 0,9 bis 1,1. Durch diese Maßnahme lassen sich Copolymere erhalten, welche besonders unempfindlich auf Salzfracht reagieren. Bevorzugt werden bei dieser Ausführungsform die Monomere (b1) in einer Menge 30 bis 80 Gew. % und die anionischen und kationischen Monomere (b2) + (b3) zusammen in einer Menge von 19,9 bis 69,9 Gew. % eingesetzt, und besonders bevorzugt werden die Monomere (b1) in einer Menge 40 bis 70 Gew. % und die anionischen und kationischen Monomere (b2) + (b3) zusammen in einer Menge von 29,9 bis 59,9 Gew. % eingesetzt, wobei jeweils das bereits genannte molare Verhältnis eingehalten werden sollte.

Monomere (c)

Neben den hydrophilen Monomeren (a) und (b) können die erfindungsgemäßen Copolymere optional von den Monomeren (a) und (b) verschiedene ethylenisch ungesättigte Monomere, bevorzugt monoethylenisch ungesättigte Monomere (c) umfassen. Selbstverständlich können auch Gemische mehrerer verschiedener Monomere (c) eingesetzt werden.

Derartige Monomere können zur Feinsteuerung der Eigenschaften des erfindungsgemäß verwendeten Copolymers verwendet werden. Falls überhaupt vorhanden, kann die Menge derartiger optional vorhandener Monomere (c) bis zu 14,9 Gew. % betragen, bevorzugt bis zu 9,9 Gew. %, besonders bevorzugt bis zu 4,9 Gew. %, jeweils bezogen auf die Gesamtmenge aller Monomere. Ganz besonders bevorzugt sind keine Monomere (c) vorhanden.

Bei den Monomeren (c) kann es sich beispielsweise um monoethylenisch ungesättigte Monomere handeln, welche einen hydrophoberen Charakter haben als die hydrophilen Monomere (b) und die dementsprechend nur in geringem Maße wasserlöslich sind. Im Regelfalle beträgt die Löslichkeit der Monomere (c) in Wasser bei Raumtemperatur weniger als 50 g/l, insbesondere weniger als 30 g/l. Beispiele derartiger Monomere umfassen N-Alkyl- und N,N,'-Dialkyl(meth)acrylamide, wobei die Anzahl der Kohlenstoffatome in den Alkylresten zusammen zusammen mindestens 3, bevorzugt mindestens 4 beträgt. Beispiele derartiger Monomere umfassen N-Butyl(meth)acrylamid, N-Cyclohexyl(meth)acrylamid oder N-Benzyl(meth)acrylamid.

Herstellung der hydrophob assoziierenden Copolymere

Die erfindungsgemäß verwendeten Copolymere können nach dem Fachmann prinzipiell bekannten Methoden durch radikalische Polymerisation der Monomere (a), (b) sowie optional (c) hergestellt werden, beispielsweise durch Lösungs- oder Gelpolymerisation in wässriger Phase.

Zur Polymerisation werden die Monomere (a), (b), optional (c), Initiatoren sowie optional weitere Hilfsstoffe zur Polymerisation in einem wässrigen Medium eingesetzt.

In einer bevorzugten Ausführungsform wird die Herstellung mittels Gelpolymerisation in wässriger Phase vorgenommen. Zur Gelpolymerisation wird zunächst eine Mischung aus den Monomeren (a), (b) sowie optional (c), Initiatoren sowie gegebenenfalls weiteren Hilfsstoffen mit Wasser oder einem wässrigen Lösemittelgemisch bereitgestellt. Geeignete wässrige Lösemittelgemische umfassen Wasser sowie mit Wasser mischbare organische Lösemittel, wobei der Anteil von Wasser im Regelfalle mindestens 50 Gew.-%, bevorzugt mindestens 80 Gew.-% und besonders bevorzugt mindestens 90 Gew.-% beträgt. Zu nennen als organische Lösemittel sind hierbei insbesondere mit Wasser mischbare Alkohole wie Methanol, Ethanol oder Propanol. Saure Monomere können vor der Polymerisation ganz oder teilweise neutralisiert werden. Die Konzentration aller Komponenten mit Ausnahme der Lösemittel im Zuge der Polymerisation beträgt üblicherweise ca. 20 bis 60 Gew.-%, bevorzugt ca. 30 bis 50 Gew.-%. Die Polymerisation sollte insbesondere bei einem pH-Wert im Bereich von 5,0 bis 7,5 und vorzugsweise bei einem pH-Wert von 6,0 durchgeführt werden.

Polymerisation in Gegenwart einer nicht polymerisierbaren, grenzflächenaktiven Verbindung

In einer bevorzugten Ausführungsform der Erfindung werden die verwendeten Copolymere in Gegenwart mindestens einer nicht-polymerisierbaren, oberflächenaktiven Verbindung (T) hergestellt.

Bei der nicht polymerisierbaren, oberflächenaktiven Verbindung (T) handelt es sich vorzugsweise um mindestens ein nicht-ionisches Tensid, aber auch anionische und kationische Tenside sind geeignet, sofern sie an der Polymerisationsreaktion nicht teilnehmen. Es kann sich insbesondere um Tenside, bevorzugt nichtionische Tenside der allgemeinen Formel $R^{13}$-Y' handeln, wobei $R^{13}$ für einen Kohlenwasserstoffrest mit 8 bis 32, bevorzugt 10 bis 20 und besonders bevorzugt 12 bis 18 Kohlenstoffatomen steht und Y' für eine hydrophile Gruppe, bevorzugt eine nichtionische hydrophile Gruppe, insbesondere eine Polyalkoxygruppe.

Bei dem nicht-ionischen Tensid handelt es sich bevorzugt um einen ethoxylierten langkettigen, aliphatischen Alkohol, welcher optional aromatische Anteile enthalten kann.

Exemplarisch seinen genannt: $C_{12}C_{14}$-Fettalkoholethoxylate, $C_{16}C_{18}$-Fettalkoholethoxylate, $C_{13}$-Oxoalkoholethoxylate, $C_{10}$-Oxoalkoholethoxylate, $C_{13}C_{15}$-Oxoalkoholethoxylate, $C_{10}$-Guerbetalkoholethoxylate und Alkylphenolethoxylate. Bewährt haben sich insbesondere Verbindungen mit 5 bis 20 Ethylenoxyeinheiten, bevorzugt 8 bis 18 Ethylenoxyeinheite. Optional können auch noch geringe Mengen von höheren Alkylenoxyeinheiten, insbesondere Propylenoxy- und/oder Butylenoxyoxyeinheiten vorhanden sein, wobei die Menge als Ethylenoxyeinheiten aber in der Regel mindestens 80 mol % bezüglich aller Alkylenoxyeinheiten betragen sollte.

Geeignet sind insbesondere Tenside ausgewählt aus der Gruppe der ethoxylierten Alkylphenole, der ethoxylierten, gesättigten iso-C13-Alkoholen und/oder der ethoxylierten C10-Guerbetalkoholen, wobei jeweils 5 bis 20 Ethylenoxyeinheiten, bevorzugt 8 bis 18 Ethylenoxyeinheiten in Alkoxyresten vorhanden sind.

Überraschenderweise führt der Zusatz nicht polymerisierbarer, grenzflächenaktiver Verbindungen (T) während

der Polymerisation zu einer deutlichen Verbesserung anwendungstechnischen Eigenschaften des Copolymers beim Polymerfluten. Insbsondere wird die Verdickungswirkung erhöht und außerdem reduziert sich der Gelanteil des Copolymers. Dieser Effekt lässt sich vermutlich folgendermaßen erklären, ohne dass die Erfindung damit auf diese Erklärung festgelegt sein soll. Bei der Polymerisation ohne Anwesenheit eines Tensids bilden die hydrophob assoziierenden Comonomere (a) in dem wässrigen Reaktionsmedium Mizellen. Bei der Polymerisation führt dies dazu, dass die hydrophob assoziierenden Bereiche blockweise in das Polymer eingebaut werden. Ist nun erfindungsgemäß bei der Herstellung der Copolymere eine zusätzliche oberflächenaktive Verbindung anwesend, bilden sich gemischte Mizellen. Diese gemischten Mizellen enthalten polymerisierbare und nicht polymerisierbare Anteile. Dadurch werden dann die hydrophob assoziierenden Monomere in kürzeren Blöcken eingebaut. Gleichzeitig ist die Anzahl dieser kürzeren Blöcke pro Polymerkette größer. Somit unterscheidet sich der Aufbau der in Gegenwart eines Tensids hergestellten Copolymere von denen ohne Anwesenheit eines Tensids.

Die nicht polymerisierbaren, grenzflächenaktiven Verbindungen (T) können im Regelfalle in einer Menge von 0,1 bis 5 Gew. % bezüglich der Menge aller eingesetzten Monomere eingesetzt werden.

Das Gewichtsverhältnis der eingesetzten, nicht polymerisierbaren, grenzflächenaktiven Verbindungen (T) zu den Monomeren (a) beträgt in der Regel 4:1 bis 1:4, bevorzugt 2:1 bis 1:2, besonders bevorzugt 1,5 : 1 bis 1:1,5 und beispielsweise ca. 1:1.

Durchführung der Polymerisation

Zur Polymerisation werden zunächst die erforderlichen Komponenten miteinander gemischt. Auf die Reihenfolge, mit der die Komponenten zur Polymerisation gemischt werden, kommt es nicht an, es ist lediglich wichtig, dass bei der bevorzugten Polymerisationsmethode die nicht polymerisierbare, grenzflächenaktive Verbindung (T) noch vor der Initiierung der Polymerisation dem wässrigen Polymerisationsmedium zugesetzt wird.

Die Mischung wird anschließend thermisch und/oder fotochemisch polymerisiert, vorzugsweise bei -5 °C bis 80 °C. Sofern thermisch polymerisiert wird, setzt man bevorzugt Polymerisationsinitiatoren ein, die schon bei vergleichsweise niedriger Temperatur die Polymerisation starten können, wie beispielsweise Redoxinitiatoren. Die thermische Polymerisation kann schon bei Raumtemperatur oder durch Erwärmen der Mischung, bevorzugt auf Temperaturen von nicht mehr als 50°C vorgenommen werden. Die fotochemische Polymerisation wird üblicherweise bei Temperaturen von -5 bis 10 °C vorgenommen. Man kann auch fotochemische und thermische Polymerisation miteinander kombinieren, indem man der Mischung sowohl Initiatoren für die thermische als auch für die fotochemische Polymerisation zugibt. Die Polymerisation wird hierbei zunächst fotochemisch bei niedrigen Temperaturen, vorzugsweise -5 bis +10 °C gestartet. Durch die freiwerdende Reaktionswärme erwärmt sich die Mischung und hierdurch wird zusätzlich die thermische Polymerisation gestartet. Mittels dieser Kombination lässt sich ein Umsatz von mehr 99 % erreichen.

In einer weiteren bevorzugten Ausführungsform der Polymerisation kann man auch die Reaktion mit einer Mischung aus einem Redoxinitiatorsystem sowie einem thermischen Initiatior, der erst bei höheren Temperaturen zerfällt ausführen. Hierbei kann es sich beispielsweise um einen wasserlöslichen Azoinitiator handeln, der im Temperaturbereich von 40°C bis 70°C zerfällt. Die Polymerisation startet hier zunächst bei niedrigen Temperaturen von beispielsweise 0 bis 10°C durch das Redoxinitiatorsystem. Durch die freiwerdende Reaktionswärme erwärmt sich die Mischung und hierdurch wird zusätzlich die Polymerisation durch den erst bei höheren Temperaturen zerfallenden Initiator gestartet.

Die Gelpolymerisation erfolgt in aller Regel ohne Rühren. Sie kann batchweise erfolgen, indem man die Mischung in einem geeigneten Gefäß bei einer Schichtdicke von 2 bis 20 cm bestrahlt und/oder erwärmt. Durch die Polymerisation entsteht ein festes Gel. Die Polymerisation kann auch kontinuierlich erfolgen. Hierzu benutzt man beispielsweise eine Polymerisationsapparatur, welche ein Transportband zur Aufnahme der zu polymerisierenden Mischung verfügt. Das Transportband ist mit Einrichtungen zum Erwärmen und/oder zum Bestrahlen mit UV-Strahlung ausgestattet. Hiernach gießt man die Mischung mittels einer geeigneten Vorrichtung am einen Ende des Bandes auf, im Zuge des Transportes in Bandrichtung polymerisiert die Mischung und am anderen Ende des Bandes kann man das feste Gel abnehmen.

Das erhaltene Gel wird nach der Polymerisation vorzugsweise zerkleinert und getrocknet. Die Trocknung sollte bevorzugt bei Temperaturen unterhalb von 100 °C erfolgen. Zum Vermeiden des Zusammenklebens kann man für diesen Schritt ein geeignetes Trennmittel verwenden. Man erhält das hydrophob assoziierende Copolymer als Granulat oder Pulver.

Weitere Einzelheiten zur Durchführung einer Gelpolymerisation sind beispielsweise in DE 10 2004 032 304 A1, Abschnitte [0037] bis [0041] offenbart.

Da das erhaltene Polymerpulver bzw. -granulat im Zuge der Anwendung am Einsatzort in der Regel als wässrige Lösung eingesetzt wird, muss das Polymer vor Ort in Wasser aufgelöst werden. Dabei kann es mit den beschriebenen, hochmolekularen Polymeren zu unerwünschten Verklumpungen kommen. Um dies zu vermeiden, kann den erfindungsgemäßen Polymeren bereits bei der Synthese ein Hilfsmittel, welches die Auflösung des getrockneten Polymers in Wasser beschleunigt bzw. verbessert, zugesetzt werden. Bei diesem Hilfsmittel kann es sich beispielsweise um Harnstoff

handeln.

Die erhaltenen Copolymere weisen in der Regel ein gewichtsmittleres Molekulargewicht $M_w$ von $1*10^6$ g/mol bis $30*10^6$ g/mol auf, bevorzugt $5*10^6$ g/mol bis $20*10^6$ g/mol.

Verfahren zur Erdölförderung

Zur Ausführung des erfindungsgemäßen Verfahrens werden in die Erdöllagerstätte mindestens eine Produktionsbohrung und mindestens eine Injektionsbohrung abgeteuft. In der Regel wird eine Lagerstätte mit mehreren Injektionsbohrungen und mit mehreren Produktionsbohrungen versehen. Durch die mindestens eine Injektionsbohrung wird eine wässrige Formulierung des beschriebenen Copolymers in die Erdöllagerstätte injiziert und der Lagerstätte durch mindestens eine Produktionsbohrung Erdöl entnommen. Mit dem Begriff "Erdöl" ist in diesem Zusammenhang selbstverständlich nicht nur phasenreines Öl gemeint, sondern der Begriff umfasst auch die üblichen Rohöl-Wasser-Emulsionen. Durch den durch die eingepresste Formulierung, die sogenannte "Polymerflut" erzeugten Druck, fließt das Erdöl in Richtung der Produktionsbohrung und wird über die Produktionsbohrung gefördert.

Die Lagerstättentemperatur der Erdöllagerstätte, auf die das erfindungsgemäße Verfahren angewandt wird, beträgt erfindungsgemäß 40°C bis 90°C, bevorzugt 45°C bis 75°C und beispielsweise 50°C bis 70°C.

Für den Fachmann ist klar, dass eine Erdöllagerstätte auch eine gewisse Temperaturverteilung aufweisen kann. Die genannte Lagerstättentemperatur bezieht sich auf den Bereich der Lagerstätte zwischen den Injektions- und Produktionsbohrungen, der vom Polymerfluten erfasst wird. Methoden zur Ermittlung der Temperaturverteilung einer Erdöllagerstätte sind dem Fachmann prinzipiell bekannt. Die Temperaturverteilung wird in der Regel aus Temperaturmessungen an bestimmten Stellen der Formation in Kombination mit Simulationsrechnungen vorgenommen, wobei man bei den Simulationsrechnungen u.a. in die Formation eingebrachte Wärmemengen sowie die aus der Formation abgeführte Wärmemengen berücksichtigt.

Das erfindungsgemäße Verfahren kann insbesondere bei Erdöllagerstätten mit einer durchschnittlichen Permeabilität von 10 mD bis 4 D, bevorzugt 100 mD bis 2 D und besonders bevorzugt 200 mD bis 1 D angewandt werden. Die Permeabilität einer Erdölformation wird vom Fachmann in der Einheit "Darcy" (abgekürzt "D" bzw. "mD" für "Millidarcy") angegeben und kann aus der Fließgeschwindigkeit einer flüssigen Phase in der Erdölformation in Abhängigkeit der angelegten Druckdifferenz bestimmt werden. Die Fließgeschwindigkeit kann in Kernflutversuchen mit der Formation entnommenen Bohrkernen bestimmt werden. Einzelheiten hierzu finden sich beispielsweise in K. Weggen, G. Pusch, H. Rischmüller in "Oil and Gas", Seiten 37 ff., Ulmann's Encyclopedia of Industrial Chemistry, Online-Ausgabe, Wiley-VCH, Weinheim 2010. Für den Fachmann ist klar, dass die Permeabilität in einer Erdöllagerstätte nicht homogen sein muss, sondern im Allgemeinen eine gewisse Verteilung aufweist, und es sich dementsprechend bei der Angabe der Permeabilität einer Erdöllagerstätte um eine durchschnittliche Permeabilität handelt.

Zur Ausführung des Verfahrens wird eine wässrige Formulierung eingesetzt, welche neben Wasser mindestens das beschriebene hydrophob assoziierende Copolymer umfasst. Selbstverständlich können auch Gemische verschiedener hydrophob assoziierender Copolymere eingesetzt werden.

Die Formulierung kann in Süßwasser aber auch in Salzen enthaltendem Wasser angesetzt werden. Selbstverständlich kann es sich um Mischungen verschiedener Salze handeln. Beispielsweise kann Meerwasser zum Ansetzen der wässrigen Formulierung verwendet werden oder es kann gefördertes Formationswasser verwendet werden, welches auf diese Art und Weise wiederverwendet wird. Bei Förderplattformen im Meer wird die Formulierung in der Regel in Meerwasser angesetzt. Bei Fördereinrichtungen an Land kann das Polymer vorteilhaft zunächst in Süßwasser gelöst und die erhaltene Lösung mit Formationswasser auf die gewünschte Einsatzkonzentration verdünnt werden. Die Formulierung kann bevorzugt hergestellt werden, indem man das Wasser vorlegt, das Copolymer als Pulver einstreut und mit dem Wasser vermischt.

Bei den Salzen kann es sich insbesondere um Alkalimetallsalze sowie Erdalkalimetallsalze handeln. Beispiele typischer Kationen umfassen $Na^+$, $K^+$, $Mg^{2+}$ oder $Ca^{2+}$ und Beispiele typischer Anionen umfassen Chlorid, Bromid, Hydrogencarbonat, Sulfat oder Borat.

Sofern die Formulierung Salze umfasst, sind in der Regel zumindest eines oder mehrere Alkalimetallionen, insbesondere zumindest $Na^+$ vorhanden. Daneben können auch noch Erdalkalimetallionen vorhanden sein, wobei das Gewichtsverhältnis Alkalimetallionen / Erdalkalimetallionen in der Regel $\geq 2$, bevorzugt $\geq 3$ ist. Als Anionen sind in der Regel zumindest eines oder mehrere Halogenid-Ionen, insbesondere zumindest $Cl^-$ vorhanden. In der Regel beträgt die Menge an $Cl^-$ zumindest 50 Gew. %, bevorzugt mindestens 80 Gew. % bezüglich der Summe aller Anionen.

Die Gesamtmenge aller Salze in der wässrigen Formulierung beträgt in der Regel 20 000 ppm bis 350 000 ppm (Gewichtsanteile), bezüglich der Summe aller Komponenten der Formulierung. Sofern Meerwasser zum Ansetzen der Formulierung verwendet wird, beträgt der Salzgehalt in der Regel 20 000 ppm bis 50 000 ppm und sofern Formationswasser verwendet wird in der Regel 100 000 ppm bis 250 000 ppm. Die Menge an Erdalkalimetallionen kann bevorzugt 1000 bis 53 000 ppm betragen.

Die wässrige Formulierung kann selbstverständlich noch weitere Komponenten umfassen. Beispiele weiterer

Komponenten umfassen Biozide, Stabilisatoren oder Inhibitoren.

Die Konzentration des Copolymers wird so festgelegt, dass die wässrige Formulierung die gewünschte Viskosität für den Einsatzzweck aufweist. Die Viskosität der Formulierung sollte in der Regel mindestens 5 mPas (gemessen bei 25°C und einer Scherrate von 7 $s^{-1}$) betragen, bevorzugt mindestens 10 mPas.

Erfindungsgemäß beträgt die Konzentration des Polymers in der Formulierung 0,01 bis 2 Gew.-% bezüglich der Summe aller Komponenten der wässrigen Formulierung. Bevorzugt beträgt die Menge 0,05 bis 0,5 Gew. %, besonders bevorzugt 0,04 bis 0,2 Gew. % und beispielsweise ca. 0,1 Gew. %.

Das Injizieren der wässrigen Copolymerformulierung kann mittels üblicher Vorrichtungen vorgenommen werden. Die Formulierung kann mittels üblicher Pumpen in eine oder mehrere Injektionsbohrungen injiziert werden. Die Injektionsbohrungen sind üblicherweise mit einzementierten Stahlrohren ausgekleidet, und die Stahlrohre sind an der gewünschten Stelle perforiert. Die Formulierung tritt durch die Perforation aus der Injektionsbohrung in die Erdölformation ein.

Über den mittels der Pumpen angelegten Druck wird in prinzipiell bekannter Art und Weise die Strömungsgeschwindigkeit der Formulierung und damit auch die Scherbelastung festgelegt, mit der die wässrige Formulierung in die Formation eintritt. Die Scherbelastung beim Eintritt in die Formation kann vom Fachmann in prinzipiell bekannter Art und Weise auf Basis des Gesetz' von Hagen-Poiseuille unter Verwendung der beim Eintritt in die Formation durchströmten Fläche, dem mittleren Porenradius und dem Volumenstrom errechnet werden. Die durchschnittliche Porosität der Formation kann in prinzipiell bekannter Art und Weise durch Messungen an Bohrkernen ermittelt werden. Die Scherbelastung ist naturgemäß umso größer, je größer der in die Formation injizierte Volumenstrom an wässriger Copolymerformulierung ist.

Die Geschwindigkeit der Injektion kann vom Fachmann je nach den Verhältnissen in der Formation festgelegt werden. Bevorzugt beträgt die Scherrate beim Eintritt der wässrigen Polymerformulierung in die Formation mindestens 30000 $s^{-1}$, bevorzugt mindestens 60000 $s^{-1}$ und besonders bevorzugt mindestens 90000 $s^{-1}$.

Zur Ausführung des Verfahrens besonders bevorzugte Copolymere umfassen Monomere (a) der allgemeinen Formel $H_2C{=}CH{-}O{-}(CH_2)_{n'}{-}O{-}({-}CH_2{-}CH_2{-}O{-})_k{-}({-}CH_2{-}CH(R^4){-}O{-})_l{-}H$ (Ia), wobei n' für 2 bis 6, bevorzugt 2 bis 4 und besonders bevorzugt 4 steht. $R^4$ steht in der bevorzugten Variante für einen Kohlenwasserstoffrest mit 3 bis 10 Kohlenstoffatomen, insbesondere für einen n-Propylrest. Weiterhin steht in Formel (Ia) k für eine Zahl von 20 bis 30 und l für eine Zahl von 6 bis 20, bevorzugt 8 bis 18. Die Menge der Monomere (a) der Formel (Ia) beträgt 0,2 bis 5 Gew.-%, bevorzugt 0,5 bis 2 Gew.-%. Als Monomer (b1) umfasst das bevorzugte Copolymer 40 bis 60 Gew. % Acrylamid und als Monomer (b2) 35 bis 55 Gew. % eines Sulfonsäuregruppen aufweisenden Monomers (b2), bevorzugt 2-Acrylamido-2-methylpropansulfonsäure bzw. Salze davon.

Weiterhin zur Ausführung des Verfahrens bevorzugte Copolymere umfassen ebenfalls 0,2 bis 5 Gew. %, bevorzugt 0,5 bis 2 Gew. % Monomere (a) der allgemeinen Formel (Ia) sowie 30 bis 40 Gew. % Acrylamid. Sie umfassen darüber hinaus 25 bis 35 Gew. % mindestens eines Sulfonsäuregruppen aufweisenden Monomers (b2), bevorzugt 2-Acrylamido-2-methylpropansulfonsäure bzw. Salze davon sowie 25 bis 35 Gew. % mindestens eines kationischen, Ammoniumionen aufweisenden Monomers, bevorzugt Salze von 3-Trimethylammoniumpropyl(meth)acrylamiden und 2-Trimethylammoniumethyl(meth)acrylaten.

Die folgenden Beispiele sollen die Erfindung näher illustrieren:

Verwendete Monomere (a)

Monomer M1

Hydroxybutylvinyletheralkoxylat mit 22 EO-Einheiten und 12 PeO-Einheiten

$$H_2C{=}CH{-}O{-}(CH_2)_4{-}O{-}({-}CH_2{-}CH_2{-}O{-})_{22}{-}({-}CH_2{-}CH(C_3H_7){-}O{-})_{12}{-}H$$

In einem 1 l Rührautoklaven aus Edelstahl werden 44,1 g Hydroxybutylvinylether vorgelegt. Anschließend werden 3,12 g KOMe (32 %ig in MeOH) dosiert und das Methanol bei 80 °C und ca. 30 mbar abgezogen. Anschließend wird auf 140 °C aufgeheizt, der Reaktor mit Stickstoff gespült und ein Stickstoff-Vordruck von 1,0 bar eingestellt. Anschließend werden 368 g EO innerhalb von ca. 3 h dosiert. Nach einer halbstündigen Nachreaktion bei 140 °C wird der Reaktor auf 125 °C abgekühlt und es werden innerhalb von 3,5 h insgesamt 392 g Pentenoxid eindosiert. Die Nachreaktion läuft über Nacht.

Das Produkt hat eine OH-Zahl von 31,9 mg KOH/g (Theorie: 26,5 mg KOH/g). Die OH-Zahl wird mittels der ESA-Methode ermittelt.

Herstellung der Copolymere

Polymer 1:

Herstellung eines Copolymers aus 2 Gew. % Monomer M1, 50 Gew. % Acrylamid und 48 Gew. % 2-Acrylamido-2-methylpropansulfonsäure

In einem Plastikeimer mit Magnetrührer, pH-Meter und Thermometer werden 121,2 g einer 50 %-igen wässrigen Lösung von NaATBS (2-Acrylamido-2-methylpropansulfonsäure, Na-Salz) vorgelegt und anschließend nacheinander 155 g destilliertes Wasser, 0,6 g eines Entschäumers (Surfynol® DF-58), 0,2 g eines Silikonentschäumers (Baysilon® EN), 2,3 g Monomer M1, 114,4 g einer 50 %-igen wässrigen Lösung von Acrylamid, 1,2 g Pentanatriumdiethylentriaminpentaacetat (Komplexbildner, als 5%-ige wässrige Lösung) und 2,4 g eines nichtionischen Tensids (Nonylphenol, alkoxyliert mit 10 Einheiten Ethylenoxid) zugegeben.

Nach Einstellen des pH-Wertes mit einer 20%-igen bzw. 2%-igen Schwefelsäure-Lösung auf einen Wert von 6 und Zugabe des restlichen Wassers wird die Monomerlösung auf die Starttemperatur von 5°C eingestellt. Die Gesamtmenge des Wassers wird so bemessen, dass -nach der Polymerisation- eine Feststoffkonzentration von ca. 30 bis 36 Gew. % erreicht wird. Die Lösung wird in eine Thermoskanne umgefüllt, ein Thermofühler für die Temperaturaufzeichnung angebracht und 30 Minuten mit Stickstoff gespült. Die Polymerisation wird anschließend durch Zugabe von 1,6 ml einer 10%-igen wässrigen Lösung eines wasserlöslichen, kationischen Azoinitiators 2,2'-Azo-bis-(2-amidinopropan)-dihydrochlorid (Wako V-50), 0,12 ml einer 1%-igen wässrigen Lösung tert.-Butylhydroperoxid sowie 0,24 ml einer 1% igen Natriumsulfit-Lösung gestartet. Nach Zugabe der Initiatoren steigt die Temperatur innerhalb von 15 bis 30 min auf ca. 80°C. Nach 30 min wird das Reaktionsgefäß zur Vervollständigung der Polymerisation für ca. 2 h in einen Trockenschrank von ca. 80°C gestellt. Die Gesamtdauer der Polymerisation beträgt ca. 2 h bis 2,5 h.

Es wird ein Gel-Block erhalten, der nach Beendigung der Polymerisation mit Hilfe eines Fleischwolfs zerkleinert wird. Das erhaltene Gel-Granulat wird in einem Wirbelschichttrockner bei 55 °C für zwei Stunden getrocknet. Man erhält dabei ein weißes, hartes Granulat, welches mittels Zentrifugalmühle in einen pulverförmigen Zustand übergeführt wird. Man erhält ein Copolymer mit einem gewichtsmittleren Molekulargewicht von ca. $1*10^6$ g/mol bis $30*10^6$ g/mol.

Polymer 2:

Herstellung eines Copolymers aus 5 Gew. % Monomer M1, 50 Gew. % Acrylamid und 45 Gew. % 2-Acrylamido-2-methylpropansulfonsäure

Es wird wie in Beispiel 1 vorgegangen, nur die Menge des Monomers M1 von 2 Gew. % auf 5 Gew. % bezüglich der Summe aller Monomere erhöht, und die Menge von 2-Acrylamido-2-methylpropansulfonsäure von 48 Gew. % auf 45 Gew. % verringert. Die Menge des Tensids (Massenanteile) entspricht der des Monomers M1.

Vergleichspolymer 1:

Hierbei handelt es sich um ein kommerziell erhältliches Copolymer zum Polymerfluten aus ca. 50 Gew. % Acrylamid und ca. 50 Gew. % 2-Acrylamido-2-methylpropansulfonsäure mit einem gewichtsmittleren Molekulargewicht $M_w$ von ca. 8 bis $13*10^6$ g/mol.

Vergleichspolymer 2:

Hierbei handelt es sich um ein kommerziell erhältliches Copolymer zum Polymerfluten aus ca. 72 Gew. % Acrylamid und ca. 28 Gew. % Na-Acrylateinheiten mit einem gewichtsmittleren Molekulargewicht $M_w$ von ca. 20 000 000 g/mol.

Vergleichspolymer 3:

Es wurde ein kommerziell erhältliches Xanthan-Polymer für die tertiäre Erdölförderung eingesetzt.

Anwendungstechnische Tests

Bestimmung der Viskosität

Die Viskositätsmessungen wurden mit einem Brookfield Viskosimeter LVDV-UL bei einer Scherrate von 7 $s^{-1}$

durchgeführt.

Für die Viskositätsmessungen wurden wässrige Lösungen der Polymere eingesetzt. Zum Lösen der Polymere wurden die folgenden wässrigen Medien eingesetzt:

Leitungswasser:

Gesamtsalinität 123 mg/l

Meerwasser (synthetisch):

Gesamtsalinität: ca. 35000 mg/l
$Na^+$ 10692 mg/l, $K^+$ 420 mg/l, $Mg^{2+}$ 1295 mg/l, $Ca^{2+}$ 422 mg/l, $Cl^-$ 19218 mg/l, $HCO_3^-$ 145 mg/l, $SO_4^{2-}$ 2697 mg/l
Verhältnis Alkalimetallionen / Erdalkalimetallionen: 6,2

Lagerstättenwasser (synthetisch):

Gesamtsalinität: 185 548 mg/l
$Na^+$ 52079 mg/l, $Mg^{2+}$ 2681 mg/l, $Ca^{2+}$ 15383 mg/l, $Cl^-$ 115105 mg/l, Borat 117 mg/l, $SO_4^{2-}$ 183 mg/l.
Verhältnis Alkalimetallionen / Erdalkalimetallionen: 2,9; Lagerstättenwaser mit hohem $Ca^{2+}$- Anteil

Es wurden die folgenden Versuche durchgeführt:

Versuchsreihe 1:

Es wurden Lösungen der Polymere 1, 2 sowie V1, V2 und V3 in einer Konzentration von jeweils 1500ppm in Meerwasser angesetzt. Es wurde die Viskosität der Lösungen bei 20°C und bei 60°C gemessen. Abbildung 1 zeigt die erhaltenen Ergebnisse.

Die wässrigen Lösungen der Vergleichspolymere 2 und 3 weisen bei 20°C eine höhere Viskosität auf, als die der erfindungsgemäß verwendeten Polymere 1 und 2. Bei allen Vergleichspolymeren ist die Viskosität bei 60°C jedoch deutlich niedriger als bei 20°C. Bei den Polymeren 1 und 2 hingegen ist die Viskosität bei 60°C signifikant höher als bei 20°C.

Versuchsreihe 2:

Es wurden Lösungen der Polymere 1 sowie V1 in einer Konzentration von jeweils 1200 ppm in Leitungswasser angesetzt und es wurde jeweils die Viskosität der Lösungen bei 30°C, 60°C, 90°C und 120°C gemessen. Abbildung 2 zeigt die erhaltenen Ergebnisse.

Die Lösung von Polymer 1 weist bei 30°C eine ca. 4 x höhere Viskosität auf als die Lösung von Polymer V1. Die Viskosität letzterer Lösung nimmt mit zunehmender Temperatur ab. Die Viskosität der wässrigen Lösung von Polymer 1 nimmt zwischen 30°C und 60°C sehr stark zu und nimmt erst beim weiteren Steigern der Temperatur ab. Selbst bei 120°C ist die Viskosität der Lösung von Polymer 1 noch größer als die des Vergleichspolymers V1.

Versuchsreihen 3 bis 5:

Es wurden Lösungen des Polymers 1 bei verschiedenen Konzentrationen in Leitungswasser, Meerwasser und Lagerstättenwasser angesetzt, und es wurde jeweils die Viskosität der Lösungen bei 30°C, 60°C, 90°C und 120°C gemessen. Die Ergebnisse sind in den Abbildungen 3 bis 5 dargestellt. Die Abbildungen enthalten auch die Informationen hinsichtlich der jeweils verwendeten Konzentrationen.

Bei allen Versuchen nimmt die Viskosität der Lösungen von 30°C bis 60°C stark zu und nimmt danach wieder ab. Das Viskositätsmaximum liegt im Bereich von ca. 50°C bis 70°C.

Versuchsreihe 6:

Es wurden Lösungen des Vergleichspolymers V1 bei verschiedenen Konzentrationen in Leitungswasser angesetzt und es wurde jeweils die Viskosität der Lösungen bei 30°C, 60°C, 90°C und 120°C gemessen. Die Ergebnisse sind in den Abbildung 6 dargestellt. Die Abbildung enthält auch die Informationen hinsichtlich der jeweils verwendeten Konzentrationen.

Beim Vergleichspolymer ist zum einen das Viskositätsniveau niedriger als bei erfindungsgemäßen Polymer 1. Weiterhin durchläuft die Viskosität kein Maximum, sondern nimmt mit zunehmender Temperatur kontinuierlich ab.

Kernflutversuche

Mit dem Copolymer von Beispiel 1 sowie dem Vergleichspolymer V1 wurden weiterhin Kernflutversuche durchgeführt.

Es wurden jeweils Sandsteinkerne (Zusammensetzung 99 Gew. % Quarz) mit einer durchschnittlichen Porosität von ca. 2 Darcy eingesetzt. Die Eigenschaften der verwendeten Sandsteinkerne sind in der nachfolgenden Tabelle 3 zusammengestellt.

Tabelle 3: Eigenschaften der verwendeten Kerne

| | Kern 1 | Kern 2 |
|---|---|---|
| Verwendetes Copolymer | Polymer 1 | V1 |
| Länge | 8,53 cm | 8,56 cm |
| Querschnittfläche | 7,02 $cm^2$ | 7,02 $cm^2$ |
| Gasdurchlässigkeit | 1993 mD | 2350 mD |
| Wasserdurchlässigkeit | 1734 mD | 2077 mD |
| Porosität | 23,6 % | 24,6 % |
| Porenvolumen | 14,2 $cm^3$ | 14,8 $cm^3$ |

Für die Kernflutversuche wurden Lösungen der Polymere in Lagerstättenwasser der oben aufgeführten Zusammensetzung mit einem Gesamtgehalt an Salzen von 186 g/l hergestellt. Die Konzentration von Polymer 1 betrug 1200 ppm und die von Vergleichspolymer V1 3000 ppm.

Für die Versuche wurde eine übliche Apparatur zum Kernfluten eingesetzt, bei dem der Kern in eine druckfeste Stahlhülse eingebracht wird, welche an den Stirnseiten beidseitig verschlossen wird, wobei die eine Seite eine Öffnung zum Injizieren von Gasen und wässrigen Lösungen aufweist und die andere Seite eine Auslassöffnung. Durch die Einlassöffnung werden Gase oder die zu prüfenden wässrigen Formulierungen mit einem bestimmten Druck injiziert und strömen unter dem Einfluss des Drucks durch den Kern. Die gesamte Apparatur ist in einem Bad zum Temperieren gelagert. Die Versuche wurden bei 55°C durchgeführt.

Durch Variation der Injektionsgeschwindigkeit (d.h. Variation des angelegten Drucks) lässt sich die scheinbare Viskosität der wässrigen Formulierungen gemäß den Gleichungen 1 bis 3 berechnen:

$$RF = \lambda(\text{Wasser}) / \lambda(\text{Polymerlösung}) \text{ mit } \lambda = k / \mu \quad \text{(Gleichung 1)}$$

RF = Widerstandsfaktor (resistance factor), $\lambda$= Mobilität, k = Permeabilität, $\mu$ = Viskosität

$$RRF = \lambda(\text{Wasser}) / \lambda(\text{Wasser nach Durchströmen der Polymerlösung})$$

RRF= verbleibender Widerstandsfaktor (residual resistance factor)

$$\mu_{app} = (RF / RRF)^* \mu_{Wasser}$$

Abbildung 7 zeigt die scheinbare Viskosität der beiden Polymerlösungen in Abhängigkeit der Strömungsgeschwindigkeit im Kern in m/Tag.

Die mittels des Kernflutversuchs ermittelten scheinbaren Viskositäten der Lösungen zeigen, dass die Viskositätseffizienz des erfindungsgemäß verwendeten Polymers bei niedrigen Strömungsgeschwindigkeiten deutlich besser ist als die von Vergleichpolymer 1, welches keine hydrophob assoziierenden Monomere aufweist, aber abgesehen davon ähnlich aufgebaut ist wie Polymer 1. Bereits bei einer Konzentration von 1200 ppm wird eine wesentlich höhere Viskosität erreicht, als bei mit Vergleichspolymer 1 bei einer Konzentration von 3000 ppm.

Die Kernflutversuche zeigen weiterhin, dass die Lösung des erfindungsgemäß verwendeten Polymers 1 ein stark scherverdünnendes (thixotropes) Verhalten hat, d.h. die Viskosität der Polymerlösung nimmt mit zunehmender Strömungsgeschwindigkeit sehr stark ab. Dies ist zum Polymerfluten besonders vorteilhaft, da -wie bereits oben dargestellt- die Strömungsgeschwindigkeit beim Eintreten in die Formation am höchsten ist und mit zunehmendem Abstand zur Injektionsstelle wieder abnimmt. Vorteilhaft verringert sich gerade an dieser Stelle die Viskosität der Lösung und ermöglicht somit ein leichtes Einpressen in die Formation. Die Lösung des Vergleichspolymers 1 hingegen zeigt scherverdickendes (dilatantes) Verhalten, d.h. die Viskosität nimmt mit zunehmender Strömungsgeschwindigkeit zu.

## Patentansprüche

1. Verfahren zur Erdölförderung, bei dem man eine wässrige Formulierung umfassend mindestens ein wasserlösliches, hydrophob assoziierendes Copolymer durch mindestens eine Injektionsbohrung in eine Erdöllagerstätte einpresst und der Lagerstätte durch mindestens eine Produktionsbohrung Rohöl entnimmt, **dadurch gekennzeichnet, dass**

   • das wasserlösliche, hydrophob assoziierende Copolymer

   (a) 0,1 bis 15 Gew.-% mindestens eines monoethylenisch ungesättigten, hydrophob assoziierenden Monomers (a) ausgewählt aus der Gruppe von

$$H_2C{=}C(R^1){-}R^2{-}O{-}({-}CH_2{-}CH(R^3){-}O{-})_k{-}({-}CH_2{-}CH(R^4){-}O{-})_l{-}R^5 \quad (I),$$

$$H_2C{=}C(R^1){-}O{-}({-}CH_2{-}CH(R^3){-}O{-})_k{-}R^6 \quad (II),$$

$$H_2C{=}C(R^1){-}(C{=}O){-}O{-}({-}CH_2{-}CH(R^3){-}O{-})_k{-}R^6 \quad (III),$$

   umfasst, wobei die Einheiten $-(-CH_2-CH(R^3)-O-)_k$ und $-(-CH_2-CH(R^4)-O-)_l$ in Blockstruktur in der in Formel (I) dargestellten Reihenfolge angeordnet sind und die Reste und Indices die folgende Bedeutung haben:

   k: eine Zahl von 15 bis 30,
   l: eine Zahl von 5 bis 25,
   $R^1$: H oder Methyl,
   $R^2$: eine Einfachbindung oder eine zweiwertige, verknüpfende Gruppe, ausgewählt aus der Gruppe von $-(C_nH_{2n})-$ [$R^{2a}$], $-O-(C_{n'}H_{2n'})-$ [$R^{2b}$] und $-C(O)-O-(C_{n''}H_{2n''})-$ [$R^{2c}$], wobei n, n' und n" jeweils für eine natürliche Zahl von 1 bis 6 stehen,
   $R^3$: unabhängig voneinander H, Methyl oder Ethyl, mit der Maßgabe, dass es sich bei mindestens 75 mol % der Reste $R^3$ um H handelt,
   $R^4$: unabhängig voneinander ein Kohlenwasserstoffrest mit mindestens 2 Kohlenstoffatomen oder eine Ethergruppe der allgemeinen Formel $-CH_2-O-R^{4'}$, wobei $R^{4'}$ für einen Kohlenwasserstoffrest mit mindestens 2 Kohlenstoffatomen steht,
   $R^5$: H oder ein Kohlenwasserstoffrest mit 1 bis 30 C-Atomen,
   $R^6$: ein aliphatischer und/oder aromatischer, geradkettiger oder verzweigter Kohlenwasserstoffrest mit 8 bis 40 Kohlenstoffatomen,

   sowie weiterhin
   (b) 85 bis 99,9 Gew. % mindestens zweier, davon verschiedener, monoethylenisch ungesättigter, hydrophiler Monomere (b) umfasst, wobei es sich bei den Monomeren (b) um

   (b1) 30 bis 95 Gew. % mindestens eines neutralen, monoethylenisch ungesättigten, hydrophilen Monomers (b1), ausgewählt aus der Gruppe von (Meth)acrylamid, N-Methyl(meth)acrylamid, N,N'-Dimethyl(meth)acrylamid oder N-Methylol(meth)acrylamid, sowie um
   (b2) mindestens ein anionisches, monoethylenisch ungesättigtes, hydrophiles Monomer (b2), welches mindestens eine saure Gruppe ausgewählt aus der Gruppe von $-COOH$, $-SO_3H$ oder $-PO_3H_2$ bzw.

deren Salze umfasst, wobei mindestens ein -$SO_3H$-Guppen umfassendes Monomer eingesetzt wird, handelt,

wobei die Mengenangaben jeweils auf die Gesamtmenge aller Monomere im Copolymer bezogen sind,

- das Copolymer ein gewichtsmittleres Molekulargewicht $M_W$ von $1*10^6$ g/mol bis $30*10^6$ g/mol aufweist,
- die Menge des Copolymers in der Formulierung 0,02 bis 2 Gew. % beträgt, und
- die Temperatur der Erdöllagerstätte 40°C bis 90°C beträgt.

**2.** Verfahren gemäß Anspruch 1, **dadurch gekennzeichnet, dass** die wasserlöslichen, hydrophob assoziierenden Copolymere neben den Monomeren (a) und (b) bis zu 14,9 Gew. % von den Monomeren (a) und (b) verschiedene monoethylenisch ungesättigte Monomere (c) umfassen.

**3.** Verfahren gemäß Anspruch 1, **dadurch gekennzeichnet, dass** die Temperatur der Erdöllagerstätte 45 bis 70°C beträgt.

**4.** Verfahren gemäß einem der Ansprüche 1 bis 3, **dadurch gekennzeichnet, dass** die wässrige Formulierung weiterhin Salze in einer Menge von 20 000 ppm bis 350 000 ppm umfasst.

**5.** Verfahren gemäß Anspruch 4, **dadurch gekennzeichnet, dass** der Anteil von Erdalkalimetallionen 1000 bis 53 000 ppm beträgt.

**6.** Verfahren gemäß Anspruch 1 bis 3, **dadurch gekennzeichnet, dass** man zum Ansetzen der wässrigen Formulierung Meerwasser verwendet.

**7.** Verfahren gemäß Anspruch 1 bis 3, **dadurch gekennzeichnet, dass** man zum Ansetzen der wässrigen Formulierung gefördertes Lagerstättenwasser verwendet.

**8.** Verfahren gemäß einem der Ansprüche 1 bis 7, **dadurch gekennzeichnet, dass** die durchschnittliche Permeabilität der Formation 10 Millidarcy bis 4 Darcy beträgt.

**9.** Verfahren gemäß einem der Ansprüche 1 bis 7, **dadurch gekennzeichnet, dass** die durchschnittliche Permeabilität der Formation 100 Millidarcy bis 2 Darcy beträgt.

**10.** Verfahren gemäß einem der Ansprüche 1 bis 9, **dadurch gekennzeichnet, dass** man die wässrige Formulierung mit einer Scherrate von mindestens 30000 $s^{-1}$ in die Formation injiziert, wobei sich die Scherrate auf den Eintritt der wässrigen Formulierung aus der Injektionsbohrung in die Erdölformation bezieht.

**11.** Verfahren gemäß einem der Ansprüche 1 bis 10, **dadurch gekennzeichnet, dass** die Menge des Copolymers in der Formulierung 0,05 bis 0,5 Gew. % beträgt.

**12.** Verfahren gemäß einem der Ansprüche 1 bis 11, **dadurch gekennzeichnet, dass** es sich bei dem hydrophob assoziierenden Monomer (a) um mindestens eines der Formel (I) handelt, und wobei

- $R^4$ für einen Kohlenwasserstoffrest mit 3 bis 8 Kohlenstoffatomen,
- k für eine Zahl von 20 bis 30, und
- $R^5$ für H, Methyl oder Ethyl steht.

**13.** Verfahren gemäß Anspruch 12, **dadurch gekennzeichnet, dass** es sich bei

- $R^4$ um einen n-Propylrest handelt,
- k für eine Zahl von 22 bis 25, und
- $R^5$ für H steht.

**14.** Verfahren gemäß einem der Ansprüche 1 bis 13, **dadurch gekennzeichnet, dass** die neutralen Monomere (b1) in einer Menge von 30 bis 95 Gew. % und die anionischen Monomere (b2) in einer Menge von 4,9 bis 69,9 Gew. % eingesetzt werden, wobei die Mengen jeweils auf die Gesamtmenge aller eingesetzten Monomere bezogen ist.

**15.** Verfahren gemäß einem der Ansprüche 1 bis 13, **dadurch gekennzeichnet, dass** das Copolymer weiterhin mindestens ein kationisches, monoethylenisch ungesättigtes, Ammoniumionen aufweisendes Monomer (b3) umfasst.

**16.** Verfahren gemäß Anspruch 15, **dadurch gekennzeichnet dass** es sich bei dem kationischen Monomer (b3) um Salze von 3-Trimethylammoniumpropyl(meth)acrylamiden und 2-Trimethylammoniumethyl(meth)acrylaten handelt.

**17.** Verfahren gemäß Anspruch 15 oder 16, **dadurch gekennzeichnet, dass** die neutralen Monomere (b1) in einer Menge von 30 bis 95 Gew. % und die anionischen Monomere (b2) und kationischen Monomere (b3) zusammen in einer Menge von 4,9 bis 69,9 Gew. % eingesetzt werden, mit der Maßgabe, dass das molare Verhältnis (b2) / (b3) 0,7 bis 1,3 beträgt, und wobei die Mengen jeweils auf die Gesamtmenge aller eingesetzten Monomere bezogen ist.

**18.** Verfahren gemäß einem der Ansprüche 1 bis 17, **dadurch gekennzeichnet, dass** die Menge der Monomere (a) 0,2 bis 5 Gew. % beträgt.

**19.** Verfahren gemäß einem der Ansprüche 1 bis 18, **dadurch gekennzeichnet, dass** es sich bei der Gruppe $R^2$ um eine Gruppe [$R^{2b}$] handelt.

## Claims

**1.** A process for mineral oil production, in which an aqueous formulation comprising at least one water-soluble, hydrophobically associating copolymer is injected through at least one injection borehole into a mineral oil deposit, and crude oil is withdrawn from the deposit through at least one production borehole, wherein

• the water-soluble, hydrophobically associating copolymer comprises

(a) 0.1 to 15% by weight of at least one monoethylenically unsaturated, hydrophobically associating monomer (a) selected from the group of

$$H_2C=C(R^1)-R^2-O-(-CH_2-CH(R^3)-O-)_k-(-CH_2-CH(R^4)-O-)_l-R^5 \quad (I),$$

$$H_2C=C(R^1)-O-(-CH_2-CH(R^3)-O-)_k-R^6 \quad (II),$$

$$H_2C=C(R^1)-(C=O)-O-(-CH_2-CH(R^3)-O-)_k-R^6 \quad (III),$$

where the $-(-CH_2-CH(R^3)-O-)_k$ and $-(-CH_2-CH(R^4)-O-)_l$ units are arranged in block structure in the sequence shown in formula (I) and the radicals and indices are each defined as follows:

k: a number from 15 to 30,
l: a number from 5 to 25,
$R^1$: H or methyl,
$R^2$: a single bond or a divalent linking group selected from the group of $-(C_nH_{2n})-$ [$R^{2a}$], $-O-(C_{n'}H_{2n'})-$ [$R^{2b}$] and $-C(O)-O-(C_{n''}H_{2n''})-$[$R^{2c}$], where n, n' and n" are each natural numbers from 1 to 6,
$R^3$: each independently H, methyl or ethyl, with the proviso that at least 75 mol% of the $R^3$ radicals are H,
$R^4$: each independently a hydrocarbyl radical having at least 2 carbon atoms or an ether group of the general formula $-CH_2-O-R^{4'}$, where $R^{4'}$ is a hydrocarbyl radical having at least 2 carbon atoms,
$R^5$: H or a hydrocarbyl radical having 1 to 30 carbon atoms,
$R^6$: an aliphatic and/or aromatic, straight-chain or branched hydrocarbyl radical having 8 to 40 carbon atoms,

and also
(b) 85 to 99.9% by weight of at least two monoethylenically unsaturated, hydrophilic monomers (b) different than (a), where the monomers (b) comprise

(b1) 30 to 95% by weight of at least one uncharged, monoethylenically unsaturated, hydrophilic monomer (b1), selected from the group of (meth)acrylamide, N-methyl(meth)acrylamide, N,N'-dimethyl(meth)acrylamide or N-methylol(meth)acrylamide, and
(b2) at least one anionic, monoethylenically unsaturated, hydrophilic monomer (b2) comprising at least one acidic group selected from the group of -COOH, $-SO_3H$ and $-PO_3H_2$ and salts thereof, where at

least one monomer comprising $-SO_3H$ groups is used,

where the proportions are each based on the total amount of all monomers in the copolymer,

- the copolymer has a weight-average molecular weight $M_W$ of $1*10^6$ g/mol to $30*10^6$ g/mol,
- the amount of the copolymer in the formulation is 0.02 to 2% by weight, and
- the temperature of the mineral oil deposit is 40°C to 90°C.

**2.** The process according to claim 1, wherein the water-soluble, hydrophobically associating copolymers, as well as monomers (a) and (b), comprise up to 14.9% by weight of monoethylenically unsaturated monomers (c) other than the monomers (a) and (b).

**3.** The process according to claim 1, wherein the temperature of the mineral oil deposit is 45 to 70°C.

**4.** The process according to any of claims 1 to 3, wherein the aqueous formulation further comprises salts in an amount of 20 000 ppm to 350 000 ppm.

**5.** The process according to claim 4, wherein the proportion of alkaline earth metal ions is 1000 to 53 000 ppm.

**6.** The process according to claims 1 to 3, wherein sea water is used to make up the aqueous formulation.

**7.** The process according to claims 1 to 3, wherein produced deposit water is used to make up the aqueous formulation.

**8.** The process according to any of claims 1 to 7, wherein the average permeability of the formation is 10 millidarcies to 4 darcies.

**9.** The process according to any of claims 1 to 7, wherein the average permeability of the formation is 100 millidarcies to 2 darcies.

**10.** The process according to any of claims 1 to 9, wherein the aqueous formulation is injected into the formation with a shear rate of at least 30 000 $s^{-1}$, where the shear rate is based on the entry of the aqueous formulation from the injection well into the mineral oil formation.

**11.** The process according to any of claims 1 to 10, wherein the amount of the copolymer in the formulation is 0.05 to 0.5% by weight.

**12.** The process according to any of claims 1 to 11, wherein the hydrophobically associating monomer (a) is at least one of the formula (I), and where

- $R^4$ is a hydrocarbyl radical having 3 to 8 carbon atoms,
- k is a number from 20 to 30, and
- $R^5$ is H, methyl or ethyl.

**13.** The process according to claim 12, wherein

- $R^4$ is an n-propyl radical,
- k is from 22 to 25, and
- $R^5$ is H.

**14.** The process according to any of claims 1 to 13, wherein the uncharged monomers (b1) are used in an amount of 30 to 95% by weight and the anionic monomers (b2) in an amount of 4.9 to 69.9% by weight, where the amounts are each based on the total amount of all monomers used.

**15.** The process according to any of claims 1 to 13, wherein the copolymer further comprises at least one cationic, monoethylenically unsaturated monomer (b3) comprising ammonium ions.

**16.** The process according to claim 15, wherein the cationic monomer (b3) comprises salts of 3-trimethylammoniumpropyl(meth)acrylamides and 2-trimethylammoniumethyl (meth)acrylates.

**17.** The process according to claim 15 or 16, wherein the uncharged monomers (b1) are used in an amount of 30 to 95% by weight and the anionic monomers (b2) and cationic monomers (b3) together in an amount of 4.9 to 69.9% by weight, with the proviso that the molar (b2)/(b3) ratio is 0.7 to 1.3, and where the amounts are each based on the total amount of all monomers used.

**18.** The process according to any of claims 1 to 17, wherein the amount of monomers (a) is 0.2 to 5% by weight.

**19.** The process according to any of claims 1 to 18, wherein the $R^2$ group comprises an $[R^{2b}]$ group.

**Revendications**

**1.** Procédé de production de pétrole, dans lequel on injecte sous pression une formulation aqueuse contenant au moins un copolymère hydrosoluble à association hydrophobe à travers au moins un orifice d'injection dans un gisement pétrolifère et on prélève du pétrole brut du gisement à travers au moins un orifice de production, **caractérisé en ce que** :

• le copolymère hydrosoluble à association hydrophobe comprend :

(a) 0,1 à 15 % en poids d'au moins un monomère (a) insaturé mono-éthylénique à association hydrophobe choisi dans le groupe constitué de

$$H_2C=C(R^1)-R^2-O-(CH_2-CH(R^3)-O)_k-(CH_2-CH(R^4)-O)_l-R^5 \qquad (I)$$

$$H_2C=C(R^1)-O-(CH_2-CH(R^3)-O)_k-R^6 \qquad (II)$$

$$H_2C=C(R^1)-(C=O)-O-(CH_2-CH(R^3)-O)_k-R^6 \qquad (III)$$

les unités $-(CH_2-CH(R^3)-O)_k$ et $-(CH_2-CH(R^4)-O)_l$ étant disposées dans la structure en blocs dans l'ordre représenté dans la formule (I), et les résidus et indices ayant la signification suivante :

k : un nombre entre 15 et 30,
l : un nombre entre 5 et 25,
$R^1$ : H ou méthyle,
$R^2$ : une liaison simple ou un groupe de liaison bivalent choisi dans le groupe constitué de $-(C_nH_{2n})-[R^{2a}]$, $-O-(C_{n'}H_{2n'})-$ $[R^{2b}]$ et $-C(O)-O-(C_{n''}H_{2n''})-$ $[R^{2c}]$, où n, n' et n'' représentent respectivement un entier naturel entre 1 et 6,
$R^3$ : indépendamment les uns des autres, H, méthyle ou éthyle, à condition qu'au moins 75 % en moles des résidus $R^3$ soient H,
$R^4$ : indépendamment les uns des autres, un résidu hydrocarbure avec au moins 2 atomes de carbone ou un groupe éther de formule générale $-CH_2-O-R^{4'}$, où $R^{4'}$ représente un résidu hydrocarbure avec au moins 2 atomes de carbone,
$R^5$ : H ou un résidu hydrocarbure avec 1 à 30 atomes de carbone,
$R^6$ : un résidu hydrocarbure aliphatique et/ou aromatique, linéaire ou ramifié, avec 8 à 40 atomes de carbone,

ainsi que, en outre
(b) 85 à 99,9 % en poids d'au moins deux différents monomères (b) hydrophiles, insaturés mono-éthyléniques, les monomères (b) étant :

(b1) 30 à 95 % en poids d'au moins un monomère (b1) hydrophile, insaturé mono-éthylénique, neutre, choisi dans le groupe constitué du (méth)acrylamide, du N-méthyl(méth)acrylamide, du N,N'-diméthyl(méth)acrylamide ou du N-méthylol(méth)acrylamide, ainsi que
(b2) au moins un monomère (b2) hydrophile, insaturé mono-éthylénique, anionique, comprenant au moins un groupe acide choisi dans le groupe constitué de -COOH, $-SO_3H$ ou $-PO_3H_2$ ou leurs sels, où au moins un monomère comprenant des groupes-$SO_3H$ est utilisé,

les indications de quantités étant respectivement rapportées à la quantité totale de tous les monomères dans

le copolymère,

- le copolymère présente un poids moléculaire moyen en poids $M_W$ entre $1.10^6$ g/mol et $30 \cdot 10^6$ g/mol,
- la quantité du copolymère dans la formulation est entre 0,02 et 2 % en poids, et
- la température du gisement pétrolifère est entre 40°C et 90°C.

**2.** Procédé selon la revendication 1, **caractérisé en ce que** les copolymères hydrosolubles à association hydrophobe contiennent, outre les monomères (a) et (b), jusqu'à 14,9 % en poids de monomères (c) insaturés mono-éthyléniques différents des monomères (a) et (b).

**3.** Procédé selon la revendication 1, **caractérisé en ce que** la température du gisement pétrolifère est entre 45°C et 70°C.

**4.** Procédé selon l'une quelconque des revendications 1 à 3, **caractérisé en ce que** la formulation aqueuse contient, en outre, des sels dans une quantité allant de 20 000 ppm à 350 000 ppm.

**5.** Procédé selon la revendication 4, **caractérisé en ce que** la teneur en ions métalliques alcalino-terreux est entre 1 000 et 53 000 ppm.

**6.** Procédé selon les revendications 1 à 3, **caractérisé en ce qu'**on utilise de l'eau de mer pour la préparation de la formulation aqueuse.

**7.** Procédé selon les revendications 1 à 3, **caractérisé en ce qu'**on utilise de l'eau produite issue du gisement pour la préparation de la formulation aqueuse.

**8.** Procédé selon l'une quelconque des revendications 1 à 7, **caractérisé en ce que** la perméabilité moyenne de la formation est entre 10 millidarcy et 4 darcy.

**9.** Procédé selon l'une quelconque des revendications 1 à 7, **caractérisé en ce que** la perméabilité moyenne de la formation est entre 100 millidarcy et 2 darcy.

**10.** Procédé selon l'une quelconque des revendications 1 à 9, **caractérisé en ce qu'**on injecte la formulation aqueuse avec un taux de cisaillement d'au moins 30 000 $s^{-1}$ dans la formation, le taux de cisaillement se rapportant à l'entrée de la formulation aqueuse issue de l'orifice d'injection dans la formation pétrolifère.

**11.** Procédé selon l'une quelconque des revendications 1 à 10, **caractérisé en ce que** la quantité du copolymère dans la formulation est entre 0,05 % et 0,5 % en poids.

**12.** Procédé selon l'une quelconque des revendications 1 à 11, **caractérisé en ce que** le monomère (a) à association hydrophobe est au moins un monomère selon la formule (I) et où :

- $R^4$ représente un résidu hydrocarbure avec 3 à 8 atomes de carbone,
- k est un nombre entre 20 et 30, et
- $R^5$ représente H, méthyle ou éthyle.

**13.** Procédé selon la revendication 12, **caractérisé en ce que** :

- $R^4$ représente un résidu n-propyle,
- k est un nombre entre 22 et 25, et
- $R^5$ représente H.

**14.** Procédé selon l'une quelconque des revendications 1 à 13, **caractérisé en ce que** les monomères neutres (b1) sont utilisés dans une quantité allant de 30 à 95 % en poids et les monomères anioniques (b2) sont utilisés dans une quantité allant de 4,9 à 69,9 % en poids, les quantités se rapportant respectivement à la quantité totale de tous les monomères utilisés.

**15.** Procédé selon l'une quelconque des revendications 1 à 13, **caractérisé en ce que** le copolymère comprend, en outre, au moins un monomère (b3) cationique, insaturé mono-éthylénique, présentant des ions ammonium.

**16.** Procédé selon la revendication 15, **caractérisé en ce que** le monomère cationique (b3) est constitué de sels de 3-triméthylammonium propyl(méth)acrylamides et de 2-triméthylammonium méthyl(méth)acrylates.

**17.** Procédé selon la revendication 15 ou 16, **caractérisé en ce que** les monomères neutres (b1) sont utilisés dans une quantité allant de 30 à 95 % en poids et les monomères anioniques (b2) et cationiques (b3) sont utilisés ensemble dans une quantité allant de 4,9 à 69,9 % en poids, à condition que le rapport molaire (b2)/(b3) est entre 0,7 et 1,3, et les quantités se rapportant respectivement à la quantité totale de tous les monomères utilisés.

**18.** Procédé selon l'une quelconque des revendications 1 à 17, **caractérisé en ce que** la quantité des monomères (a) est entre 0,2 et 5 % en poids.

**19.** Procédé selon l'une quelconque des revendications 1 à 18, **caractérisé en ce que** le groupe $R^2$ est un groupe [$R^{2b}$].

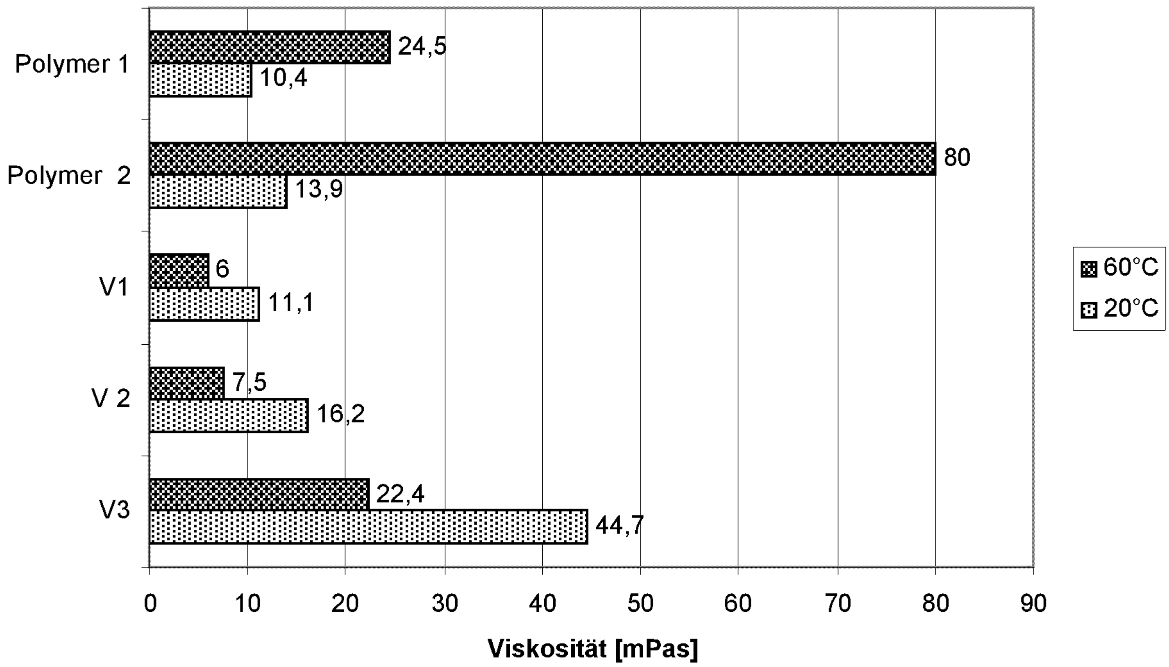


Abb. 1: Ergebnisse der Versuchsreihe 1

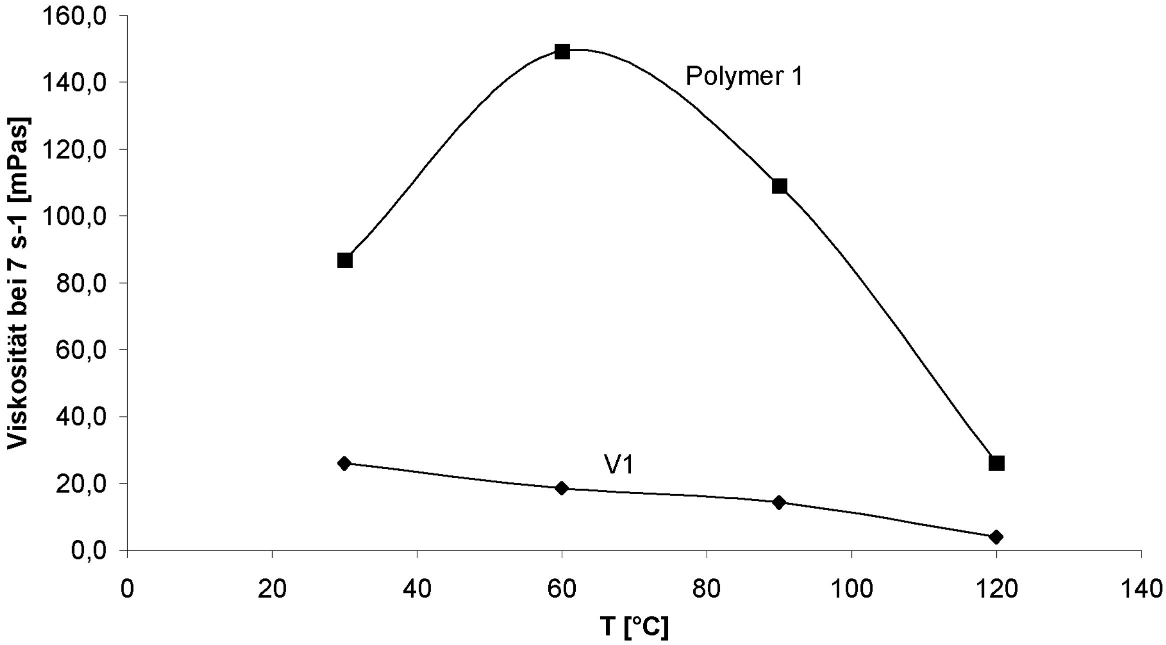


Abb. 2  Ergebnisse der Versuchsreihe 2

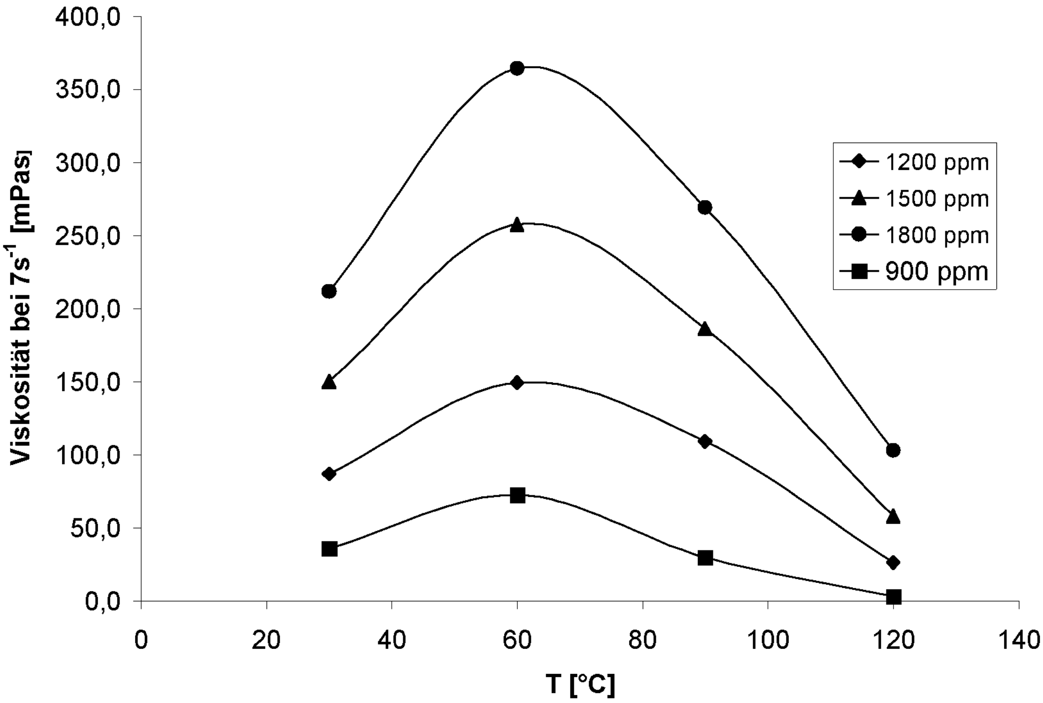


Abb. 3: Ergebnisse der Versuchsreihe 3

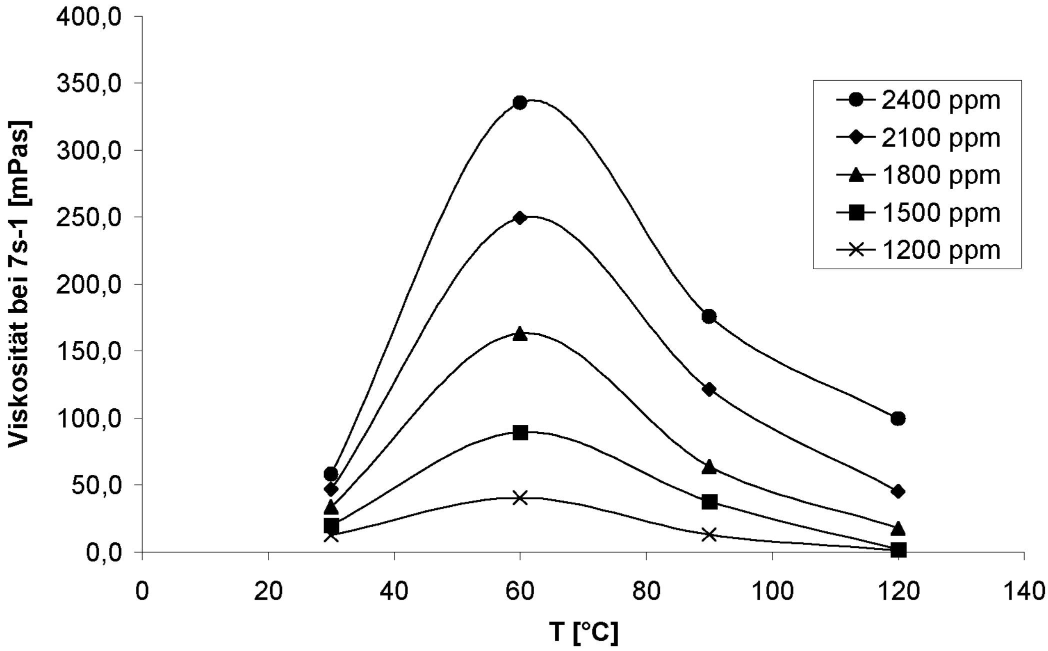


Abb. 4: Ergebnisse der Versuchsreihe 4

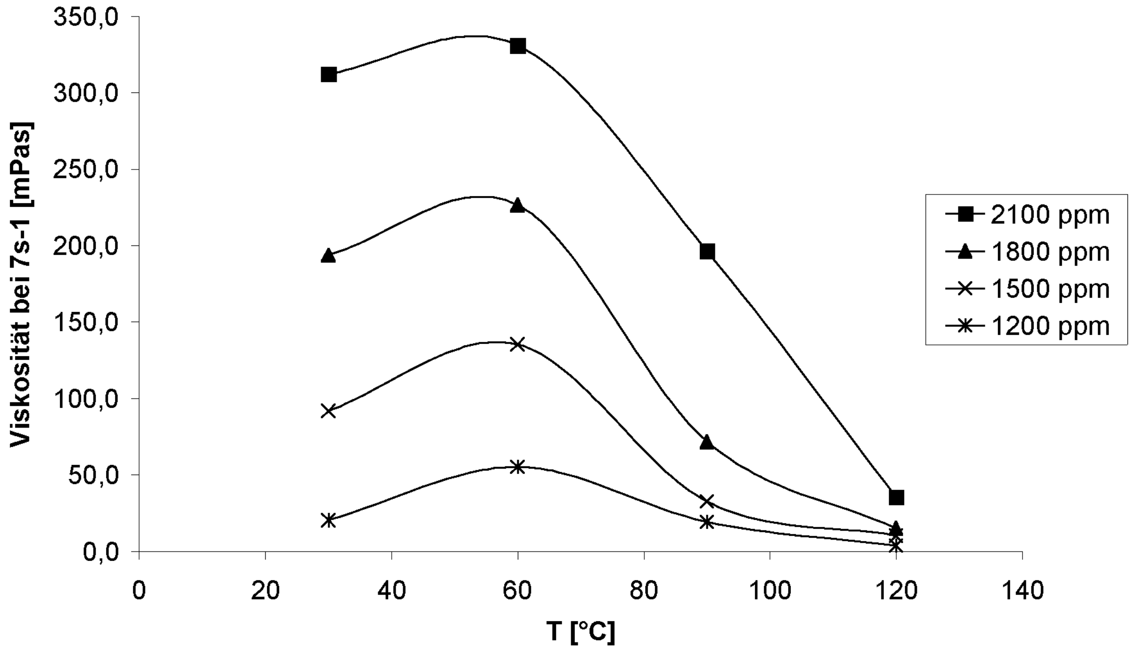


Abb. 5: Ergebnisse der Versuchsreihe 5

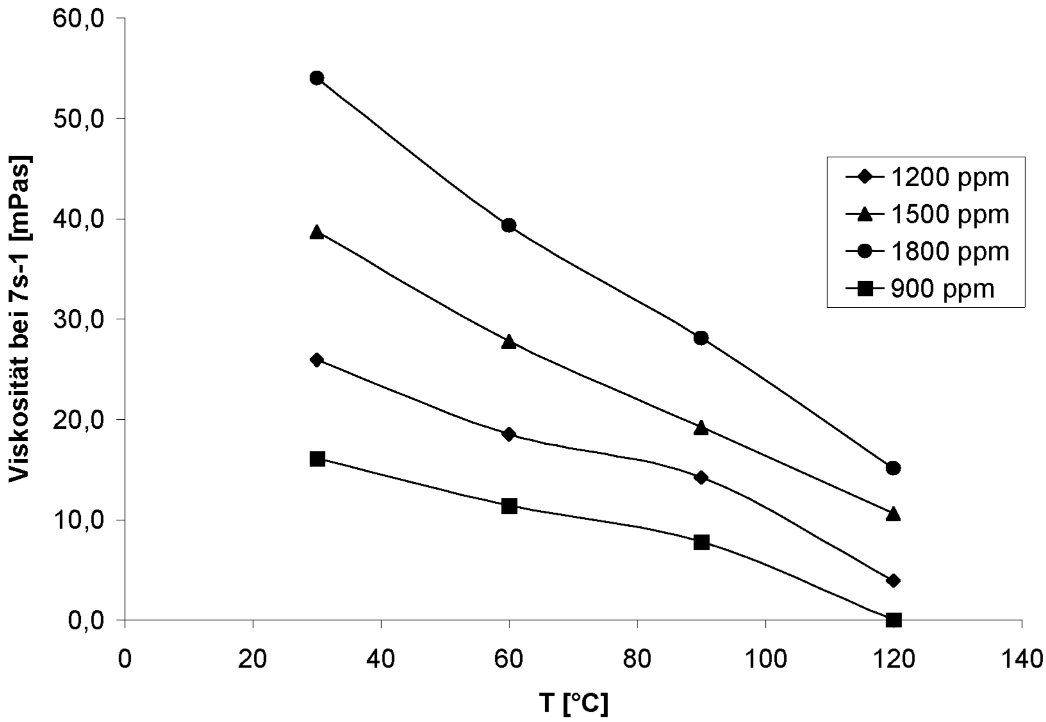


Abb. 6: Ergebnisse der Versuchsreihe 6

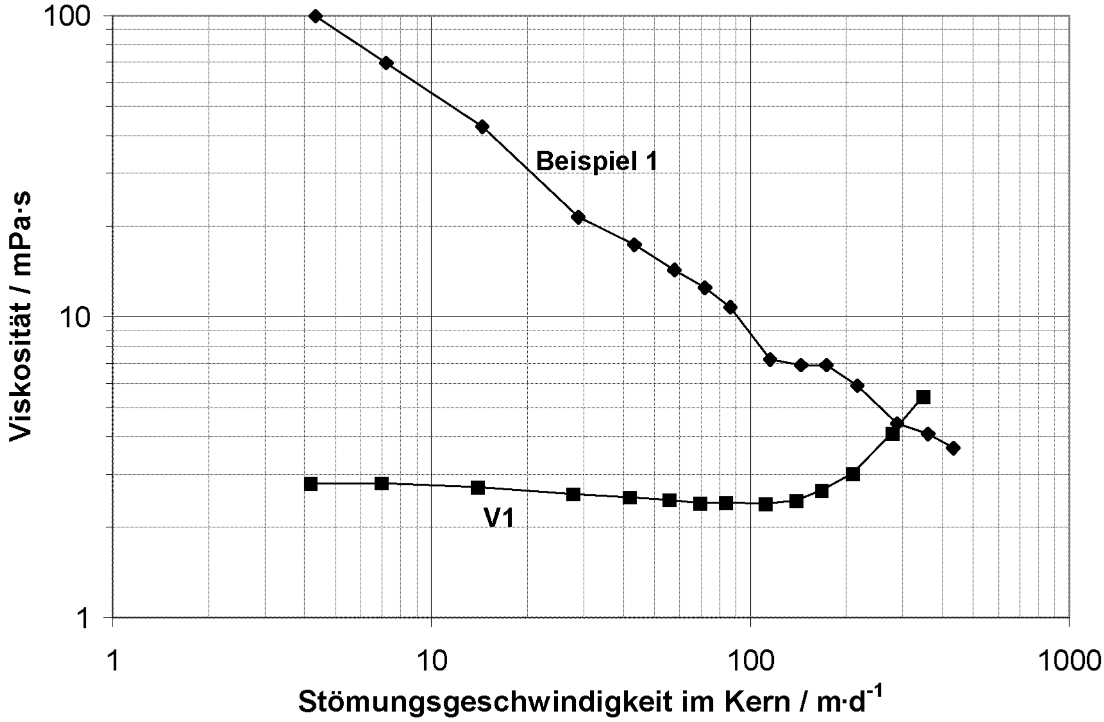


Abb. 7: Ergebnisse des Kernflutversuchs

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6392596 B1
- CA 832277
- EP 705854 A1
- DE 10037629 A1
- DE 102004032304 A1
- WO 2010133527 A2
- WO 2011015520 A1
- DE 4325237 A1
- DE 10243361 A1


### In der Beschreibung aufgeführte Nicht-Patentliteratur


- **D. G. KESSEL.** *Journal of Petroleum Science and Engineering,* 1989, vol. 2, 81-101
- Petroleum, Enhanced Oil Recovery. Kirk-Othmer, Encyclopedia of Chemical Technology. John Wiley & Sons, 2010
- **TAYLOR, K.C. ; NASR-EL-DIN, H.A.** *J. Petr. Sci. Eng.,* 1998, vol. 19, 265-280
- **MASOUD RASHIDI ; ANNE MARIT BLOKHUS ; ARNE SKAUGE.** *Journal of Applied Polymer Science,* 2010, vol. 117, 1551-1557
- Oil and Gas. **K. WEGGEN ; G. PUSCH ; H. RISCHMÜLLER.** Ulmann's Encyclopedia of Industrial Chemistry. Wiley-VCH, 2010, 37 ff